# EUROPÄISCHE PATENTSCHRIFT

(11) **EP 1 368 408 B1**
(45) Veröffentlichungstag und Bekanntmachung des Hinweises auf die Patenterteilung: **17.11.2004**
(21) Anmeldenummer: 02716811.1
(22) Anmeldetag: 26.02.2002
(51) Int. Cl.: C08G 65/26, C09D 11/00, C09D 11/10, C09B 67/00, C09D 17/00

(54) **OXALKYLIERUNGSPRODUKTE HERGESTELLT AUS EPOXIDEN UND AMINEN UND DEREN VERWENDUNG IN PIGMENTPRÄPARATIONEN**
OXALKYLATION PRODUCTS PRODUCED FROM EPOXIDES AND AMINES AND THEIR USE IN PIGMENT PREPARATIONS
PRODUITS D'OXALKYLATION PRODUITS A PARTIR D'EPOXYDES ET D'AMINES ET LEUR UTILISATION DANS DES PREPARATIONS PIGMENTAIRES

(30) Priorität: 28.02.2001 DE 10109483
(43) Veröffentlichungstag der Anmeldung: 10.12.2003
(73) Patentinhaber: Clariant GmbH, 65929 Frankfurt am Main (DE)
(72) Erfinder: WINTER, Martin, Alexander, 65779 Kelkheim (DE); METZ, Hans, Joachim, 64285 Darmstadt (DE); HARZ, Andreas, 65824 Schwalbach (DE); PFRENGLE, Andreas, 55411 Bingen (DE)
(74) Vertreter: Hütter, Klaus, Dr.
(86) Internationale Anmeldenummer: PCT/EP2002/001989
(87) Internationale Veröffentlichungsnummer: WO 2002/068504

(56) Entgegenhaltungen:
- EP-A- 0 017 189
- EP-A- 0 253 272
- DE-A- 2 163 143
- US-A- 4 237 320
- US-A- 4 566 963
- US-A- 4 960 935

## Beschreibung

Die vorliegende Erfindung liegt auf dem Gebiet grenzflächenaktiver, tensidischer Mittel und betrifft oxalkylierte Additionsverbindungen, die durch Umsetzung von Polyepoxiden mit Aminen erhalten werden. Die Erfindung betrifft außerdem die Herstellung der Additionsverbindungen sowie deren Verwendung als Dispergiermittel für Feststoffe, insbesondere Pigmente.

Bei der Herstellung von Feststoffdispersionen werden häufig oberflächenaktive Substanzen verwendet, die den mechanischen Aufwand bei der Dispergierung der Feststoffe in flüssige Medien verringern sollen. Bei der Herstellung von Präparationen und Dispersionen von Farbmitteln, beispielsweise Dispersionsfarbstoffen, oder anorganischen und organischen Pigmenten, für Anwendungen in wässrigen oder organischen Medien wird eine Vielzahl nichtionischer, anionischer sowie kationischer Tenside zu diesem Zweck eingesetzt. Bei der Einarbeitung von Pigmenten und deren Zubereitungen in Anstrichsysteme, Druckfarben und Kunststoffe treten zuweilen weitere Schwierigkeiten auf, da sich zahlreiche Pigmente im jeweiligen Anwendungsmedium nur sehr unzureichend und unter hohem Dispergieraufwand flockungsstabil feinverteilen lassen. Die anwendungstechnischen Eigenschaften sind deshalb sehr oft unzureichend. So können sowohl schon während des Dispergiervorgangs als auch erst danach Flockungserscheinungen und Sedimentbildung auftreten, die zu unerwünschten Viskositätsänderungen des Anwendungsmediums, zu Farbtonänderungen und Verlusten an Farbstärke, Deckvermögen, Glanz, Homogenität, Brillanz sowie schlecht reproduzierbaren Farbtönen und zu hoher Ablaufneigung im Falle von Lacken bei den gefärbten Materialien führen.

Die US-A-3,853,770 beschreibt Additionsprodukte aus Polyepoxiden und sekundären Aminen als Weichspüler für textile Materialien.
Diese Produkte sind jedoch nicht geeignet, die Fließfähigkeit sowie die Flockungsstabilität von wässrigen Pigmentdispersionen entscheidend zu verbessern, ohne dabei andere Parameter wie z.B. Farbstärke, Glanz, Farbton und Farbreinheit nachteilig zu beeinflussen.

Die EP-A-0 071 861 beschreibt Additionsverbindungen, die durch Reaktion von aus Bisphenol-A abgeleiteten Diepoxiden mit Phenolen erhalten und anschließend noch oxalkyliert werden. Als Anwendungsgebiet dieser meist wasserlöslichen Verbindungen wird die Dispergierung von Pigmenten beschrieben.

Die EP-A-0 044 025 sowie die DE-A-29 13 176 beschreiben Verbindungen, die ebenfalls durch Reaktion von aus Bisphenol-A abgeleiteten Diepoxiden und Etheraminen, die anschließend noch oxalkyliert werden, zugänglich sind. Diese ebenfalls wasserlöslichen Verbindungen werden auch als Dispergiermittel für Pigmente beschrieben. Die in diesen Druckschriften beschriebenen Produkte sind jedoch oftmals nicht geeignet, die Fließfähigkeit sowie die Flockungsstabilität bei Pigmentdispersionen zu gewährleisten, ohne dabei andere Parameter, wie z.B. die Farbstärke, nachteilig zu beeinflussen.

Die US-A-5,070,159 beschreibt Additionsprodukte, die aus Polyepoxiden und einem Gemisch von aliphatischen, aromatischen und/oder heterocyclischen Aminen hergestellt werden. Die Polyepoxide sind auf Basis von 2,3-Epoxypropyl-Novolaken mit 3 bis 11 Kernen aufgebaut. Die beschriebenen Additionsverbindungen sind jedoch nicht oxalkyliert und werden als Dispergiermittel für Feststoffe ausschließlich in organischen Medien beschrieben.

Der vorliegenden Erfindung lag die Aufgabe zugrunde, grenzflächenaktive Hilfsmittel für Feststoffdispersionen zur Verfügung zu stellen, die zur Herstellung gut fließfähiger, flockungsbeständiger sowie lagerstabiler Feststoffdispersionen, vorzugsweise Farbmitteldispersionen, für den Außen- und Innenanstrich geeignet, weitgehend frei von den vorstehend genannten Nachteilen sind und nicht auf Bisphenol-A aufbauen.

Es wurde gefunden, dass nachstehend definierte Oxalkylierungsprodukte, hergestellt aus Epoxiden und Aminen, überraschenderweise diese Aufgaben lösen.

Gegenstand der vorliegenden Erfindung sind Additionsverbindungen der Formel (1), 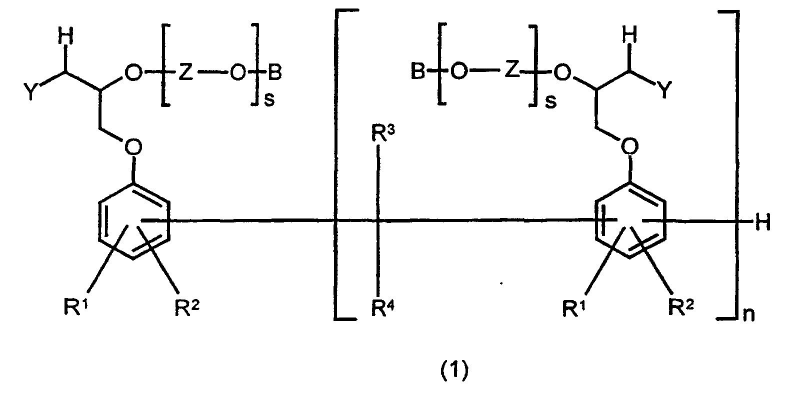 in der
- n: eine Zahl von 1 bis 10, beispielsweise 1, 2, 3, 4, 5 oder 6;
- R¹, R²: gleich oder verschieden sind und jeweils ein Wasserstoffatom oder ein gesättigter oder ungesättigter aliphatischer Rest mit 1 bis 4 Kohlenstoffatomen sind;
- R³, R⁴: gleich oder verschieden sind und jeweils ein Wasserstoffatom oder Alkyl mit 1 bis 3 Kohlenstoffatomen sind, und das Brückenglied 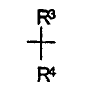 jeweils in ortho- oder meta-Position zum phenolischen O-Atom steht;
- Z: für eine Gruppe -CH₂-CH₂-, -CH₂-CH(CH₃)-, -CH(CH₃)-CH₂- oder eine Kombination davon steht,
- s: für eine Zahl zwischen 1 und 200 steht,
- B: für Wasserstoff, -CO-CH=CH-COOM,
-COCH(SO₃M)CH₂COOM, -CO-CH₂-CH(SO₃M)-COOM, -SO₃M, -SO₂M und/oder -PO₃MM steht, wobei M ein Kation ist, vorzugsweise aus der Gruppe Li⁺, Na⁺, K⁺, NH₄⁺, HO-CH₂-CH₂-NH₃⁺, (HO-CH₂-CH₂-)₂NH₂⁺ oder (HO-CH₂-CH₂-)₃NH⁺ und
- Y: ein Rest eines Amins der Formel (4) ist 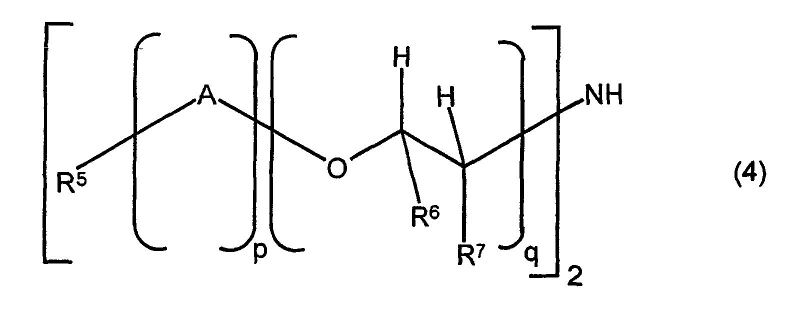
in der
- R⁵: für einen gesättigten oder ein- oder mehrfach ungesättigten aliphatischen Rest mit 6 bis 30 Kohlenstoffatomen steht,
- A: für Phenylen oder Naphthylen steht,
- p: Null oder 1 ist,
- R⁶, R⁷: jeweils Wasserstoff oder ein Methylrest sind, jedoch nicht gleichzeitig ein Methylrest, und
- q: eine Zahl von 0 bis 40 ist;
und/oder Y ein Rest eines Amins der allgemeinen Formel (5) ist 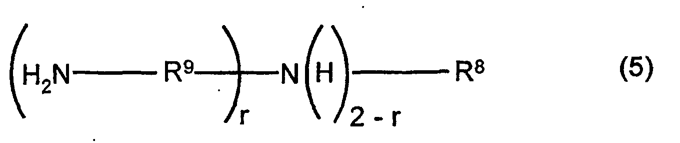 in der
- r: für eine Zahl von 0 bis 2 steht,
- R⁸: für einen gesättigten oder ein- oder mehrfach ungesättigten aliphatischen Rest mit 8 bis 24 Kohlenstoffatomen steht und
- R⁹: für eine Alkylengruppe mit 2 bis 6 Kohlenstoffatomen steht,
und/oder Y ein Rest der Amine der allgemeinen Formeln (6), (7), (8) und/oder (9) ist 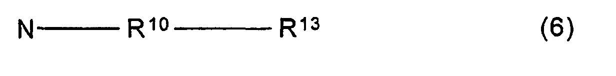 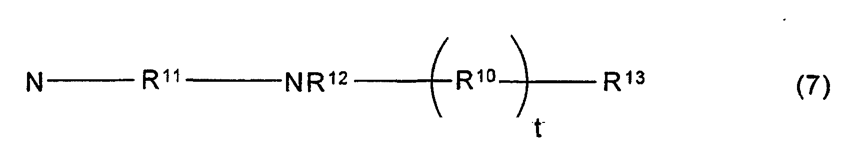 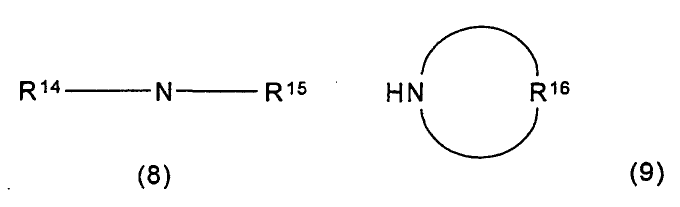 worin
- t: für 0 oder 1 steht,
- R¹⁰: für eine Alkylengruppe mit 1 bis 10 Kohlenstoffatomen,
- R¹¹: für eine Alkylengruppe mit 2 bis 6 Kohlenstoffatomen,
- R¹²: für ein Wasserstoffatom oder eine Alkylgruppe mit 1 bis 4 Kohlenstoffatomen,
- R¹³: für ein gesättigtes oder ein- oder mehrfach ungesättigtes, ein- oder mehrkerniges heterocyclisches oder carbocyclisches Ringsystem mit 3 bis 18 C-Atomen, das gegebenenfalls noch 1, 2 oder 3 weitere Heteroatome aus der Gruppe N, S und O im Ring enthält, wobei das Ringsystem durch einen oder mehrere, z.B. 1, 2 oder 3, der Reste R¹⁷, Halogenatome wie -F, -Cl sowie -Br, -OR¹⁷, -NR¹⁷R¹⁸, -COOR¹⁷, -CONR¹⁷R¹⁸, -NR¹⁷-COR¹⁸, -NO₂, -CN oder CF₃ substituiert sein kann, wobei R¹⁷ und R¹⁸ unabhängig voneinander für Wasserstoff oder einen Alkylrest mit 1 bis 10 Kohlenstoffatomen, insbesondere Wasserstoff oder eine Alkylgruppe mit 1 bis 4 Kohlenstoffatomen stehen,
- R¹⁴, R¹⁵: gleich oder verschieden sind und jeweils für einen gesättigten oder ein- oder mehrfach ungesättigten aliphatischen Rest mit 1 bis 24 Kohlenstoffatomen stehen; und
- R¹⁶: zusammen mit dem Stickstoffatom der Formel (9) ein 5- bis 7-gliedriges heterocyclisches Ringsystem bildet, das gegebenenfalls noch 1, 2 oder 3 weitere Heteroatome aus der Gruppe N, S und O im Ring enthält, wobei das Ringsystem durch einen oder mehrere der Reste R¹⁷, Halogenatome wie -F, -Cl sowie -Br, -OR¹⁷, -NR¹⁷R¹⁸, -COOR¹⁷, -CONR¹⁷R¹⁸, -NR¹⁷-COR¹⁸, -NO₂, -CN oder CF₃ substituiert sein kann.

Gegenstand der Erfindung sind auch Mischungen von Additionsverbindungen der Formel (1), so dass die Zahl n auch gebrochene Werte annehmen kann, wie z.B. 1,1 bis 10, vorzugsweise 1,2 bis 6.
R¹ und R² bedeuten vorzugsweise Wasserstoff oder Methyl.
R³ und R⁴ bedeuten vorzugsweise Wasserstoff oder Methyl.
Vorzugsweise bedeutet s eine Zahl von 5 bis 100, insbesondere von 10 bis 40.
M bedeutet vorzugsweise Wasserstoff, ein Alkalimetall oder ein Ammoniumion, das alkylsubstituiert sein kann.
R⁵ bedeutet vorzugsweise ein C₆-C₁₈-Alkyl oder C₆-C₁₈-Alkenyl.
Vorzugsweise bedeutet q eine Zahl von 2 bis 25, insbesondere von 4 bis 12.
Vorzugsweise bedeutet r die Zahl 1 oder 2.
R⁸ bedeutet vorzugsweise C₁₂-C₂₀-Alkyl oder C₁₂-C₂₀-Alkenyl.
R⁹ bedeutet vorzugsweise Propylen oder Butylen.
Vorzugsweise bedeutet t die Zahl 1.
R¹⁰ bedeutet vorzugsweise C₁-C₆-Alkylen.
R¹¹ bedeutet vorzugsweise Ethylen oder Propylen.
R¹² bedeutet vorzugsweise Wasserstoff oder Methyl.
R¹³ bedeutet vorzugsweise Phenyl, Naphthyl, Pyrazolyl, Triazolyl, Piperidinyl, Oxazolidinyl, Imidazolyl, Pyrrolyl, Pyrrolidinyl, Carbazolyl, Benzthiazolyl, Benzimidazolyl, Dihydropyrrolyl, Dihydropyrazolyl und Oxazolidonyl.

R¹⁴ und R¹⁵ bedeuten vorzugsweise C₁-C₁₂-Alkyl oder C₂-C₁₂-Alkenyl.
Die Verbindung der Formel (9) bedeutet vorzugsweise Pyrazol, Triazol, Piperidin, Oxazolidin, Imidazol, Pyrrol, Pyrrolidin, Carbazol, Dihydropyrrol, Dihydropyrazol, Oxazolidon, Morpholin, Dihydropyridin oder Azepin.

Gegenstand der Erfindung ist auch ein Verfahren zur Herstellung der Additionsverbindungen der Formel (1), indem man eine Epoxyverbindung der Formel (2) 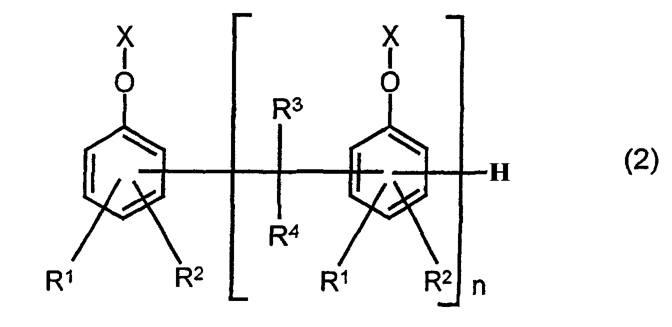 worin X die Bedeutung 2,3-Epoxypropyl hat,
mit einem oder mehreren Aminen der Formeln (4) bis (9) umsetzt, oxalkyliert und das entstandene Oxalkylat gegebenenfalls mit Maleinsäureanhydrid halbverestert und gegebenenfalls sulfiert.

Gegenstand der Erfindung ist auch ein Reaktionsprodukt, erhältlich nach dem vorstehend beschriebenen Verfahren.

Als Epoxide der Formel (2) eignen sich handelsübliche polyfunktionelle Epoxide auf Basis von Novolaken. Novolake können nach üblichen Verfahren z.B. durch Kondensation von Phenolen und/oder Alkylphenolen mit Alkanalen in Gegenwart von sauren Katalysatoren kondensiert werden.

Die 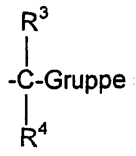 steht in o- oder m-Position zur -O-X-Gruppe.

Zur Synthese der Epoxide werden die phenolischen Hydroxylgruppen nach üblichen Verfahren, z.B. wie in US 2,505,486 beschrieben, beispielsweise mit Epichlorhydrin zum Glycidylether umgesetzt.
Von besonderem Interesse sind Polyepoxide der allgemeinen Formel (2), in der R¹ und R² unabhängig voneinander jeweils ein Wasserstoffatom, Methyl, Ethyl, 1-Propyl, 2-Propyl, 1-Butyl, sec-Butyl oder tert.-Butyl bedeuten. Die allgemeine Formel (2) ist als idealisierte Formel anzusehen und beschreibt daher auch alle handelsüblichen Polyepoxide, bei denen aufgrund von Nebenreaktionen bei der Einführung der Epoxygruppe an die phenolische Hydroxygruppe nicht alle Hydroxylgruppen verethert und in den 2,3-Epoxypropylrest überführt werden. Ausgangsprodukt für das erfindungsgemäße Verfahren sind deshalb auch Polyepoxide, in denen bis zu 30 % aller X in der allgemeinen Formel (2) andere synthesebedingte Reste beschreiben, z.B. 2,3-Dihydroxy-prop-1-yl- und/oder 3-Chlor-2-hydroxy-prop-1-yl-Reste. Dem Fachmann ist außerdem bekannt, dass bei der Herstellung von Novolaken nach üblichen Verfahren, z.B. durch Kondensation von Phenolen und/oder Alkylphenolen mit Alkanalen in Gegenwart von sauren Katalysatoren, vielfach Gemische verschiedener Kondensate entstehen können. Da aus Kostengründen solche Gemische im allgemeinen nicht in die reinen Spezies getrennt werden, kann der Index n auch Werte annehmen, die von den ganzen Zahlen abweichen.
Ein Beispiel für handelsübliche Polyepoxide der allgemeinen Formel (2) sind z.B. die ®ARALDITE.

Die sekundären Etheramine der Formel (4) sind z.B. gemäß dem in der DE-A-2 555 895 beschriebenen Verfahren zugänglich. Dabei werden Oxalkylate der Formel (10) 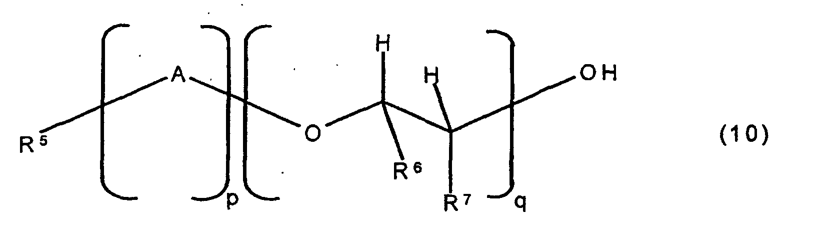 in flüssiger Phase mit Ammoniak und Wasserstoff in Anwesenheit von (De)hydrierungskatalysatoren, beispielsweise Nickel- und Kobaltkatalysatoren, umgesetzt.

Als Reste R⁵ der sekundären Etheramine der allgemeinen Formel (4) kommen insbesondere die Alkylreste von Fettalkoholen, die aus natürlichen Fetten und Ölen gewonnen werden sowie von Alkoholen aus der Oxosynthese in Frage. Von den Aminen, wie sie die allgemeinen Formeln (4), (5), (6), (7), (8) und (9) beschreiben, seien genannt:
Octylamin, Decylamin, Dodecylamin, Tetradecylamin, Hexadecylamin, Octadecylamin, Cocosfettamin, Laurylamin, Oleylamin, Rapsölfettamin, Stearylamin, Talgfettamin, Dicocosalkylpentaoxoethylamin, Didecylamin, Diisotridecylamin, Distearylamin, Ditalgfettamin, Dicocosamin, Talgfettpropylendiamin, Oleylpropylendiamin, Laurylpropylendiamin, N,N-Bis(aminopropyl)-Talgfettamin, 1-(3-Aminopropyl)imidazol sowie Furfurylamin.

Bei der Umsetzung der Amine mit dem Polyepoxid der allgemeinen Formel (2) werden vorzugsweise 50 bis 100 %, insbesondere 70 bis 100 %, der 2,3-Epoxypropylreste mit einem Amin der allgemeinen Formel (4) oder Mischungen mehrerer Amine der allgemeinen Formel (4) sowie vorzugsweise 0 bis 50 %, insbesondere 0 bis 30 %, mit Aminen der allgemeinen Formel (5), (6), (7, (8) und/oder (9) zur Reaktion gebracht.

Das Epoxid wird vorzugsweise in einem Reaktionsschritt mit dem entsprechenden Amin oder der Amin-Mischung zur Reaktion gebracht. Dabei kann die Reaktion in Gegenwart oder in Abwesenheit von Lösungsmitteln durchgeführt werden, die unter den Reaktionsbedingungen inert oder zumindest vernachlässigbar reaktiv sind. Zu nennen sind beispielsweise Kohlenwasserstoffe, insbesondere aromatische Kohlenwasserstoffe wie z.B. Toluol, oder Ethylenglykolether wie z.B. Ethylenglykolmonomethylether. Die Reaktion kann bei Temperaturen von 0 bis 200°C, vorzugsweise bei 40 bis 160°C, durchgeführt werden. Es ist zweckmäßig, die Reaktion unter Ausschluss von Sauerstoff durchzuführen. Als Katalysatoren für die Epoxidringöffnung kommen insbesondere saure Katalysatoren wie z.B. Aluminiumchlorid oder Phenole in Betracht.

Die anschließende Oxalkylierung der mit den Aminen geöffneten Glycidylether an der Hydroxylgruppe erfolgt nach bekannten Methoden, vorzugsweise mit Alkalihydroxiden oder Alkalialkoxiden als Katalysator bei 100 bis 200°C, bevorzugt bei 140 bis 180°C. Die Menge Ethylenoxid und/oder Propylenoxid wird so bemessen, dass eine stabile Emulgierbarkeit oder völlige Löslichkeit der Anlagerungsprodukte in Wasser erreicht wird. Bevorzugt werden je Hydroxygruppe der 1,2-Aminoalkoholgruppe 1 bis 200, vorzugsweise 10 bis 40, Mol Ethylenoxid und/oder Propylenoxid angelagert. Man kann aber auch zunächst mit Propylenoxid eine Polyoxypropylenkette und anschließend mit Ethylenoxid eine Polyoxyethylenkette einfügen. Die Menge des angelagerten Alkylenoxides bemisst sich dabei auch nach dem beabsichtigten Einsatzzweck und dem damit angestrebten Grad der Hydrophilie. Als Alkalihydroxid eignen sich Kaliumhydroxid und/oder Natriumhydroxid, als Alkalialkoxid Natriummethylat oder -ethylat. Die Konzentration des Katalysators soll bevorzugt 0,05 bis 2 Gew.-%, bezogen auf das Amin-Glycidylether-Addukt, bei Beginn der Oxalkylierung sein. Die Oxalkylierung kann drucklos oder in Druckgefäßen mit Propylen- oder bevorzugt Ethylenoxid oder Mischungen von beiden durchgeführt werden, wobei das Alkylenoxid gasförmig oder flüssig zugeführt werden kann. Der Arbeitsdruck bei der Durchführung in Druckgefäßen beträgt 1 bis 10 bar, vorzugsweise 2 bis 6 bar. Die erhaltenen Verbindungen oder Mischungen von Verbindungen können entweder direkt oder als wässrige und/oder organische Lösung, je nach beabsichtigtem Einsatzzweck, verwendet werden.

Sollen die terminalen Hydroxylgruppen aufgrund des beabsichtigten Einsatzzwecks des Dispergiermittels weiter umgesetzt werden, können diese entweder mit entsprechenden stöchiometrischen oder substöchiometrisch Mengen (bezogen auf die terminalen Hydroxylgruppen) an Maleinsäureanhydrid oder anderen reaktiven Maleinsäurederivaten vollständig oder teilweise in die entsprechenden Maleinsäurehalbester überführt werden. Die Halbveresterung erfolgt durch Mischen und Verrühren von z.B. Maleinsäureanhydrid mit dem oxalkylierten Amin-Glycidylether-Addukt bei 10 bis 110°C, bevorzugt bei 40 bis 80°C, wahlweise in Anwesenheit von Alkalihydroxiden, deren Konzentration 0,1 bis 2,0 Gew.-%, bezogen auf die Gesamtmischung, betragen soll. Da Maleinsäureanhydrid zur Sublimation neigt, kann es verfahrenstechnisch von Vorteil sein, in Druckgefäßen unter einem Überdruck von ca. 0,2 bis 1,0 bar Inertgas zu arbeiten und außerdem für kräftige Durchmischung zu sorgen.

Die Überführung der Maleinsäurehalbester in die entsprechenden Sulfobernsteinsäurehalbester erfolgt durch Zugabe von wässriger Sulfit- oder Hydrogensulfitlösung. Dabei kann die Menge der Lösung so bemessen sein, daß entweder alle oder auch nur ein Teil der Maleinsäurehalbestergruppen in Sulfobernsteinsäurehalbestergruppen überführt werden. Dabei werden auf jede umzusetzende Maleinsäurehalbestergruppe 1,0 bis 2,0 Equivalente, bevorzugt 1,05 bis 1,15 Equivalente, Alkali- oder Erdalkalisulfit, Hydrogensulfit oder Disulfit eingesetzt. Werden bei dieser Umsetzung wässrige Lösungen von Sulfiten eingesetzt, entstehen die entsprechenden neutralen Salze der Sulfobernsteinsäurehalbester. Werden wässrige Lösungen von Hydrogensulfiten eingesetzt, entstehen saure Halbestersalze. Die zugesetzte Wassermenge kann 30 bis 90 Gew.-%, bezogen auf die Gesamtlösung oder Mischung, betragen. Sie ist insbesondere von der Löslichkeit der Sulfobernsteinsäurehalbester sowie der Viskosität der Lösung abhängig.

Die erfindungsgemäßen Verbindungen eignen sich zum Dispergieren von Feststoffen, insbesondere in wässrigen Flüssigkeiten. Zu erwähnen sind Dispersionen, die als Feststoffe beispielsweise feinteilige Erze, Mineralien, schweroder unlösliche Salze, Wachs- oder Kunststoffteilchen , Pflanzenschutz- und Schädlingsbekämpfungsmittel, optische Aufheller, UV-Absorber bzw. Lichtschutzstabilisatoren, insbesondere Farbstoffe und organische oder anorganische Pigmente enthalten.

Gegenstand der vorliegenden Erfindung sind auch Pigmentpräparationen, enthaltend
a) 1 bis 80 Gew.-%, vorzugsweise 5 bis 60 Gew.-%, insbesondere 10 bis 50 Gew.-%, eines oder mehrerer Pigmente;
b) 1 bis 50 Gew.-%, vorzugsweise 5 bis 40 Gew.-%, insbesondere 8 bis 30 Gew.-%, mindestens einer Verbindung der Formel (1) oder mindestens eines der nach vorstehend beschriebenem Verfahren hergestellten Oxalkylierungsprodukte aus Epoxiden der Formel (2) und Aminen der Formeln (4) bis (9);
c) 0 bis 50 Gew.-%, insbesondere 0 bis 30 Gew.-% an weiteren Zusatzstoffen; und
d) 10 bis 80 Gew.-% Wasser,
jeweils bezogen auf das Gesamtgewicht (100 Gew.-%) der Pigmentpräparation.

Die Pigmente, die in den erfindungsgemäßen Zubereitungen enthalten sind, unterliegen keiner Beschränkung. Sie können organischer oder anorganischer Natur sein. Beispiele für organische Pigmente im Sinne der Erfindung sind Monoazopigmente, Disazopigmente, verlackte Azopigmente, Triphenylmethanpigmente, Thioindigopigmente, Thiazinindigopigmente, Perylenpigmente, Perinonpigmente, Anthanthronpigmente, Diketopyrrolopyrrolpigmente, Dioxazinpigmente, Chinacridonpigmente, Phthalocyaninpigmente, Isoindolinonpigmente, Isoindolinpigmente, Benzimidazolonpigmente, Naphtholpigmente und Chinophthalonpigmente. Insbesondere zu nennen sind ebenfalls saure bis alkalische Ruße aus der Gruppe Furnaceruße oder Gasruße.

Geeignete anorganische Pigmente sind beispielsweise Titandioxide, Zinksulfide, Eisenoxide, Chromoxide, Ultramarin, Nickel- oder Chromantimontitanoxide, Cobaltoxide sowie Bismutvanadate.

Weitere übliche Zusatzstoffe sind beispielsweise anionische, kationische oder nichtionische Tenside, Additive zum Einstellen der Rheologie, als Dispergiermittel wirkende Pigmentderivate, z.B. N-(C₁₀-C₃₀)-Alkyl- oder N-(C₁₀-C₃₀)-Alkenylphthalimide, die in der EP-A-0 542 052 genannten Harnstoffverbindungen, schaumreduzierende Mittel, Konservierungsmittel, Gerüstsubstanzen, die in Emulgier- und Dispergierformulierungen verwendet werden, das Eintrocknen verhindernde Zusätze, wie z.B. Glykole wie Propandiol-1,2, Monoethylenglykol oder Diethylenglykol, höhermolekulare Polyetherpolyole, welche ein als Zahlenmittel bestimmtes Molekulargewicht von 250 bis 10000, insbesondere 250 bis 2000 besitzen, mit einem Siedepunkt bei Normaldruck von größer 150°C. Als Polyetherpolyole kommen dabei Homo-, Co- oder Block-Co-Polyetherpolyole in Frage, die durch Umsetzung von Ethylenoxid und/oder Propylenoxid mit Wasser oder niedermolekularen Alkoholen oder Aminen hergestellt werden können.

Als Tenside eignen sich alle bekannten anionischen, kationischen und nichtionischen grenzflächenaktiven Verbindungen. Besonders bewährt haben sich Tenside, die eine oder mehrere mittel- oder langkettige Kohlenwasserstoffkette besitzen. Von der Vielzahl der Verbindungen soll an dieser Stelle nur eine Auswahl aufgeführt werden, ohne jedoch die Anwendbarkeit der erfindungsgemäßen Verbindungen auf diese Beispiele einzuschränken. Beispiele sind Alkylsulfate, Alkylsulfonate, Alkylphosphate, Alkylbenzolsulfonate wie Laurylsulfat, Stearylsulfat, Dodecylsulfonate, Octadecylsulfate, Dodecylsulfonate, Kondensationsprodukte aus Fettsäure und Taurin oder Hydroxyethansulfonsäure, Alkoxylierungsprodukte von Alkylphenolen, Ricinusölkolophoniumestern, Fettalkoholen, Fettaminen, Fettsäuren, und Fettsäureamiden, Umsetzungsprodukte aus Nonylphenol und kürzerkettigen, substituierten Alkylphenolen sowie deren polymeren Derivaten, z.B. Formaldehyd-Kondensationsprodukten sowie polymere Verbindungen wie z.B. Polyacrylaten.
Auf dieser Basis hergestellte, wässrige Dispersionen eignen sich in hervorragender Weise zur Pigmentierung hydrophiler als auch hydrophober Systeme und zeichnen sich durch sehr niedrige Antrocknungs- oder Austrocknungsneigung aus.

Ein besonders hervorzuhebendes Merkmal ist die deutlich verbesserte Redispergierbarkeit von an- oder eingetrockneten Präparationsanteilen.

Gegenstand der vorliegenden Erfindung ist auch ein Verfahren zur Herstellung der erfindungsgemäßen Pigmentpräparationen, indem die Verbindung(en) der Formel (1) und gegebenenfalls die weiteren Zusatzstoffe bei der Pigmentsynthese, oder während eines der üblichen Formierungsschritte wie Mahlung, Dispergierung oder Finish oder auch erst bei der Einarbeitung des Pigments in das Anwendungsmedium zugegeben werden. Die Verbindung der Formel (1) kann dabei in reiner oder gelöster Form dem als Feststoff oder als Dispersion in Wasser oder einem organischen Lösemittel vorliegenden Pigment zugegeben werden. Dispergier- und Mahlprozesse erfolgen je nach Kornhärte des verwendeten Pigments in bekannter Weise, beispielsweise in Sägezahnrührern (Dissolvern), Rotor-Stator-Mühlen, Turbulent-Schnellmischern, Kugel-, Sand- oder Perlmühlen, in Knetaggregaten oder auf Walzenstühlen.

Die auf diese Weise hergestellten flüssig bis pastösen Pigmentpräparationen sind für jeden Zweck verfügbar, für den Farbmitteldispersionen üblicherweise anwendbar sind und hohe Anforderungen an Flockungs- und/oder Lagerstabilität, Viskositätsänderungen des Anwendungsmediums, Farbtonänderungen, Farbstärke, Deckvermögen, Glanz, Homogenität und Brillanz gestellt werden.

So eignen sie sich beispielsweise zum Färben natürlicher sowie synthetischer Materialien. Besonders wertvoll sind sie für die Pigmentierung von Anstrich- und Dispersionsfarben, Dispersionslacken, für Druckfarben, beispielsweise Textildruck-, Flexodruck- oder Tiefdruckfarben, für Tapetenfarben, für wasserverdünnbare Lacke, für Holzschutzsysteme, für Putze, für Holzbeizen, für Papiermassen, für Buntstiftminen, Faserschreiber, Tuschen, Pasten für Kugelschreiber, Kreiden, Wasch- und Reinigungsmittel, Schuhpflegemittel, Einfärbung von Latex-Produkten, Schleifmitteln sowie zum Einfärben von Kunststoffen und hochmolekularen Materialien.
Außerdem eignen sich die erfindungsgemäßen Pigmentdispersionen als Farbmittel in elektrophotographischen Tonern und Entwicklern, wie z.B. Ein- oder Zweikomponentenpulvertonern (auch Ein- oder Zweikomponenten Entwickler genannt), Magnettonern, Flüssigtonern, Polymerisationstonern sowie weiteren Spezialtonern (L.B. Schein, "Electrophotography and Development Physics"; Springer Series in Electrophysics 14, Springer Verlag, 2^{nd} edition, 1992).
Des weiteren sind die erfindungsgemäßen Pigmentdispersionen geeignet, als Farbmittel in Ink-Jet Tinten auf wässriger und nichtwässriger Basis, sowie in solchen Tinten, die nach dem Hot-melt Verfahren arbeiten oder auf Microemulsionen basieren.

Die erfindungsgemäßen Pigmentdispersionen sind in jedem Verhältnis mit Wasser mischbar zeichnen sich gegenüber herkömmlichen Pigmentdispersionen durch eine hervorragende Flockungs- sowie Lagerstabilität in zahlreichen wässrigen Dispersionsfarben aus. Werden zur Herstellung der Pigmentdispersionen Additive verwendet, die mit hydrophoben Lackbindemittel-Systemen kompatibel sind, so lassen sich auch in hydrophoben Medien flockungsstabile Dispersionen herstellen. Hervorzuheben sind insbesondere die guten rheologischen Eigenschaften sowie die ausgezeichnete Verteilbarkeit in unterschiedlichen Anwendungsmedien. Die erfindungsgemäßen Dispergiermittel ermöglichen es also, auch in Kombination mit geeigneten anderen Hilfsmitteln, beim Dispergierprozess die volle Farbstärke und Brillanz der Pigmente zu erreichen und im Anwendungsmedium dauerhaft zu stabilisieren. Helle und brillante Farbtöne werden durch die geringe Eigenfärbung der erfindungsgemäßen Dispergiermittel nicht beeinträchtigt.

Die nachfolgenden Beispiele dienen zur näheren Erläuterung der Erfindung, Prozentangaben beziehen sich auf das Gewicht, Teile bedeutet Gewichtsanteile. Viskositäten wurden bei 23°C mit einem Kegel-Platten Viskosimeter gemessen, sie sind bezogen auf ein Schergefälle von D = 60 sec⁻¹. Raumtemperatur bedeutet eine Temperatur von etwa 25°C.

### Herstellungsbeispiel 1

In einem Rührgefäß wurden 457,5 Teile eines Amins der Formel (4) mit R⁶, R⁷ = Wasserstoff, R⁵ = Alkylrest des Cocosfettalkohols, p = 0, und q = 5, sowie 0,26 Teile Phenol unter Schutzgasatmosphäre vorgelegt. Diese Mischung wurde auf 100°C Innentemperatur erwärmt und bei dieser Temperatur 129,6 Teile eines feingepulverten Polyepoxids der idealisierten Struktur in Formel (2) mit R¹ = 2-Methyl, R², R³, R⁴ = Wasserstoff, n = 5, Epoxyequivalentgewicht 225 [g/eq] (®Araldit ECN 1273), innerhalb von 5 Minuten zugegeben. Die Mischung wurde innerhalb von 45 Minuten auf eine Innentemperatur von 150°C erwärmt und die Reaktionsmischung 7 Stunden bei dieser Temperatur gerührt. Das erhaltene Additionsprodukt war leicht gelblich gefärbt aber klar, es hatte eine Viskosität von η = 1125 mPas.
492,1 Teile des Additionsprodukts wurden in ein Druckgefäß überführt und unter Rühren mit 3,0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 532,0 Teile Ethylenoxid bei 150 bis 160°C unter Aufrechterhaltung eines Druckes von etwa 4 bis 6 bar innerhalb von 70 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelbliche, trübe zähflüssige Masse mit einer Viskosität von η = 27375 mPas vor.

### Herstellungsbeispiel 2

In einem Rührgefäß wurden 205,9 Teile eines Amins der Formel (4) mit R⁶, R⁷ = Wasserstoff, R⁵ = Alkylrest des Cocosfettalkohols, p = 0, und q = 5, 7,7 Teile Oleylamin einer Zusammensetzung von 1 % C₁₂, 3 % C₁₄, 18 % C₁₆, 76 % C₁₈, 1 % C₂₀, und einer Iodzahl von 75 bis 85, sowie 0,13 Teile Phenol unter Schutzgasatmosphäre vorgelegt. Diese Mischung wurde auf 100°C Innentemperatur erwärmt und bei dieser Temperatur 64,8 Teile eines feingepulverten Polyepoxids der idealisierten Struktur in Formel (2) mit R¹ = 2-Methyl, R², R³, R⁴ = Wasserstoff, n = 5, Epoxyequivalentgewicht 225 [g/eq], innerhalb von 5 Minuten zugegeben. Die Mischung wurde auf eine Innentemperatur von 120°C erwärmt, bei dieser Temperatur 4 Stunden gehalten, danach auf 150°C erwärmt und die Reaktionsmischung weitere 2 Stunden bei dieser Temperatur gerührt. Das erhaltene Additionsprodukt war leicht gelblich gefärbt aber klar, es hatte eine Viskosität von η = 5328 mPas.
224,8 Teile des Additionsprodukts wurden in ein Druckgefäß überführt und unter Rühren mit 1,5 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 295,0 Teile Ethylenoxid bei 150 bis 160°C unter Aufrechterhaltung eines Druckes von etwa 4 bis 5,5 bar innerhalb von 40 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelbliche, trübe zähflüssige Masse mit einer Viskosität von η = 53960 mPas vor.

### Herstellungsbeispiel 3

In einem Rührgefäß wurden 210,5 Teile eines Amins der Formel (4) mit R⁶, R⁷ = Wasserstoff, R⁵ = Alkylrest des Cocosfettalkohols, p = 0, und q = 5, 14,7 Teile Ditalgfettamin einer Zusammensetzung von 3 % C₁₄, 29 % C₁₆, 63 % C₁₈, ≤ 3 % C₂₀, und einer Iodzahl von 45 bis 55, sowie 0,13 Teile Phenol unter Schutzgasatmosphäre vorgelegt. Diese Mischung wurde auf 100°C Innentemperatur erwärmt und bei dieser Temperatur 66,2 Teile eines feingepulverten Polyepoxids der idealisierten Struktur in Formel (2) mit R¹ = 2-Methyl, R², R³, R⁴ = Wasserstoff, n = 5, Epoxyäquivalentgewicht 225 [g/eq], innerhalb von 5 Minuten zugegeben. Die Mischung wurde innerhalb von 45 Minuten auf eine Innentemperatur von 150°C erwärmt und die Reaktionsmischung 7 Stunden bei dieser Temperatur gerührt. Das erhaltene Additionsprodukt war leicht gelblich gefärbt aber klar, es hatte eine Viskosität von η = 2800 mPas.
248,7 Teile des Additionsprodukts wurden in ein Druckgefäß überführt und unter Rühren mit 1,5 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 315,0 Teile Ethylenoxid bei 150 bis 160°C unter Aufrechterhaltung eines Druckes von etwa 4 bis 5,5 bar innerhalb von 40 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelbliche, trübe zähflüssige Masse mit einer Viskosität von η = 32170 mPas vor.

### Herstellungsbeispiel 4

In einem Rührgefäß wurden 160,1 Teile eines Amins der Formel (4) mit R⁶, R⁷ = Wasserstoff, R⁵ = Alkylrest des Cocosfettalkohols, p = 0, und q = 5, 43,2 Teile Ditalgfettamin mit einer Zusammensetzung von 3 % C₁₄, 29 % C₁₆, 63 % C₁₈, ≤ 3 % C₂₀, und einer Iodzahl von 45 bis 55, sowie 0,3 Teile Phenol unter Schutzgasatmosphäre vorgelegt. Diese Mischung wurde auf 100°C Innentemperatur erwärmt und bei dieser Temperatur 64,8 Teile eines feingepulverten Polyepoxids der idealisierten Struktur in Formel (2) mit R¹ = 2-Methyl, R², R³, R⁴ = Wasserstoff, n = 5, Epoxyequivalentgewicht 225 [g/eq], innerhalb von 5 Minuten zugegeben. Die Mischung wurde innerhalb von 45 Minuten auf eine Innentemperatur von 150°C erwärmt und die Reaktionsmischung 7 Stunden bei dieser Temperatur gerührt. Das erhaltene Additionsprodukt war leicht gelblich gefärbt aber klar, es hatte eine Viskosität von η = 3742 mPas.
209,9 Teile des Additionsprodukts wurden in ein Druckgefäß überführt und unter Rühren mit 1,0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 285,0 Teile Ethylenoxid bei 150 bis 160°C unter Aufrechterhaltung eines Druckes von etwa 4 bis 5,5 bar innerhalb von 40 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelbliche, trübe zähflüssige Masse mit einer Viskosität von η = 46610 mPas vor.

### Herstellungsbeispiel 5

In einem Rührgefäß wurden 288,0 Teile Ditalgfettamin einer Zusammensetzung von 3 % C₁₄, 29 % C₁₆, 63 % C₁₈, ≤ 3 % C₂₀, Iodzahl 45 bis 55, sowie 0,26 Teile Phenol unter Schutzgasatmosphäre vorgelegt. Diese Mischung wurde auf 100°C Innentemperatur erwärmt und bei dieser Temperatur 129,6 Teile eines feingepulverten Polyepoxids der idealisierten Struktur in Formel (2) mit R¹ = 2-Methyl, R², R³, R⁴ = Wasserstoff, n = 5, Epoxyequivalentgewicht 225 [g/eq], innerhalb von 5 Minuten zugegeben. Diese Mischung wurde innerhalb von 45 Minuten auf eine Innentemperatur von 150°C erwärmt und die Mischung 7 Stunden bei dieser Temperatur gerührt. Das erhaltene Additionsprodukt war eine leicht bräunlich-gelb gefärbte, klare zähflüssige Masse.
388,9 Teile des Additionsprodukts wurden in ein Druckgefäß überführt und unter Rühren mit 3,0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 937,0 Teile Ethylenoxid bei 150 bis 160°C unter Aufrechterhaltung eines Druckes von etwa 4 bis 5,5 bar innerhalb von 95 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelblich-hellbraune, trübe wachsartige Masse vor.

### Herstellungsbeispiel 6

In einem Rührgefäß wurden 290,9 Teile Distearylamin einer Zusammensetzung von 3 % C₁₄, 29 % C₁₆, 63 % C₁₈, ≤ 3 % C₂₀, Iodzahl ≤ 5, sowie 0,26 Teile Phenol unter Schutzgasatmosphäre vorgelegt. Diese Mischung wurde auf 100°C Innentemperatur erwärmt und bei dieser Temperatur 129,6 Teile eines feingepulverten Polyepoxids der idealisierten Struktur in Formel (2) mit R¹ = 2-Methyl, R², R³, R⁴ = Wasserstoff,
n = 5, Epoxyäquivalentgewicht 225 [g/eq], innerhalb von 5 Minuten zugegeben. Diese Mischung wurde innerhalb von 45 Minuten auf eine Innentemperatur von 150°C erwärmt und die Mischung 7 Stunden bei dieser Temperatur gerührt. Das erhaltene Additionsprodukt war eine leicht gelblich gefärbte, klare zähflüssige Masse.
396,8 Teile des Additionsprodukts wurden in ein Druckgefäß überführt und unter Rühren mit 3,0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 950,0 Teile Ethylenoxid bei 150 bis 160°C unter Aufrechterhaltung eines Druckes von etwa 4 bis 5.5 bar innerhalb von 120 Minuten oxethyliert. Nachdem das gesamte Ethylenoxid aufgedrückt war, wurde noch 40 Minuten bei 120°C Innentemperatur nachgerührt. Das erhaltene Oxethylat lag bei Raumtemperatur als leicht gelblich-hellbraune, trübe wachsartige Masse vor.

### Herstellungsbeispiel 7

In einem Rührgefäß wurden 205,9 Teile eines Amins der Formel (4) mit R⁶, R⁷ = Wasserstoff, R⁵ = Alkylrest des Cocosfettalkohols, p = 0, und q = 5, 1,9 Teile Pyrrol sowie 0,13 Teile Phenol unter Schutzgasatmosphäre vorgelegt. Diese Mischung wurde auf 100°C Innentemperatur erwärmt und bei dieser Temperatur 64,8 Teile eines feingepulverten Polyepoxids der idealisierten Struktur in Formel (2) mit R¹ = 2-Methyl, R², R³, R⁴ = Wasserstoff, n = 5, Epoxyäquivalentgewicht 225 [g/eq], innerhalb von 5 Minuten zugegeben. Die Mischung wurde innerhalb von 45 Minuten auf eine Innentemperatur von 150°C erwärmt und die Reaktionsmischung 7 Stunden bei dieser Temperatur gerührt.
216,5 Teile des Additionsprodukts wurde in ein Druckgefäß überführt und unter Rühren mit 1.0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 285,0 Teile Ethylenoxid bei 150 bis 160°C unter Aufrechterhaltung eines Druckes von etwa 4 bis 5,5 bar innerhalb von 95 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelblich-braune, trübe und wachsartige Masse vor.

### Herstellungsbeispiel 8

In einem Rührgefäß wurden 205,9 Teile eines Amins der Formel (4) mit R⁶, R⁷ = Wasserstoff, R⁵ = Alkylrest des Cocosfettalkohols, p = 0, und q = 5, sowie 0,13 Teile Phenol unter Schutzgasatmosphäre vorgelegt. Diese Mischung wurde auf 100°C Innentemperatur erwärmt und bei dieser Temperatur 64,8 Teile eines feingepulverten Polyepoxids der idealisierten Struktur in Formel (2) mit R¹ = 2-Methyl, R², R³, R⁴ = Wasserstoff, n = 5, Epoxyequivalentgewicht 225 [g/eq], innerhalb von 5 Minuten zugegeben. Die Mischung wurde innerhalb von 45 Minuten auf eine Innentemperatur von 150°C erwärmt und die Reaktionsmischung 5 Stunden bei dieser Temperatur gerührt. Danach werden bei dieser Temperatur 3,6 Teile 1,3-Aminopropylimidazol in einer Portion zugegeben und die Reaktionsmischung weitere 2 Stunden bei dieser Temperatur gerührt. Das erhaltene Additionsprodukt war rot-bräunlich gefärbt aber klar, es hatte eine Viskosität von η = 11230 mPas.
218,8 Teile des Additionsprodukts wurden in ein Druckgefäß überführt und unter Rühren mit 1,0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 285,0 Teile Ethylenoxid bei 150 bis 160°C unter Aufrechterhaltung eines Druckes von etwa 4 bis 5,5 bar innerhalb von 40 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als tiefbraune, trübe zähflüssige Masse mit eine Viskosität von Viskosität von η = 35930 mPas vor.

### Herstellungsbeispiel 9

In einem Rührgefäß wurden 116,0 Teile eines Polyepoxids der idealisierten Struktur in Formel (2) mit R¹, R², R³, R⁴ = Wasserstoff, n = 1,2, Epoxyequivalentgewicht 175 [g/eq] (®Araldit EPN 1179) sowie 0.26 Teile Phenol unter Schutzgasatmosphäre vorgelegt. Diese Mischung wurde auf 100°C Innentemperatur erwärmt und bei dieser Temperatur 524.2 Teile eines Amins der Formel (4) mit R⁶, R⁷ = Wasserstoff, R⁵ = Alkylrest des Cocosfettalkohols, p = 0, und q = 5 innerhalb von 15 Minuten zugegeben. Die Mischung wurde innerhalb von 45 Minuten auf eine Innentemperatur von 160°C erwärmt und die Reaktionsmischung 8 Stunden bei dieser Temperatur gerührt. Das erhaltene Additionsprodukt war leicht gelblich gefärbt aber klar, es hatte eine Viskosität von η = 456 mPas.
493,5 Teile des Additionsprodukts wurden in ein Druckgefäß überführt und unter Rühren mit 3,0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 560,3 Teile Ethylenoxid bei 150 bis 160°C unter Aufrechterhaltung eines Druckes von etwa 4 bis 6 bar innerhalb von 60 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelbliche, trübe zähflüssige Masse vor.

### Herstellungsbeispiel 10

In einem Rührgefäß wurden 491,6 Teile Talgfettamin einer Zusammensetzung von 3 % C₁₄, 29 % C₁₆, 63 % C₁₈, < 3 % C₂₀, Iodzahl 40 bis 50, Aminzahl 208 bis 220 unter Schutzgasatmosphäre vorgelegt und auf 140°C Innentemperatur erwärmt. Bei dieser Temperatur werden 328.5 Teile eines Polyepoxids der idealisierten Struktur in Formel (2) mit R¹, R², R³, R⁴ = Wasserstoff, n = 1.5, Epoxyequivalentgewicht 175 [g/eq] (®Araldit PY 307-1) innerhalb von 6 Stunden kontinuierlich zugegeben. Danach wurde der Ansatz für weitere 2 Stunden bei dieser Temperatur gerührt. Das erhaltene Additionsprodukt war bei Raumtemperatur eine helle wachsartige Masse.
224.8 Teile des Additionsprodukts wurden in ein Druckgefäß überführt und unter Rühren mit 3,0 Teile Kaliumhydroxid-Lösung (40 gew.-%ig) versetzt. Die Reaktionsmischung wurde auf 150°C erwärmt und mit leichtem Vakuum das Wasser der Kaliumlauge innerhalb von ca. 30 Minuten abdestilliert. Dann wurde unter Rühren und Zuführung von 905.0 Teile Ethylenoxid bei 150 bis 160°C unter Aufrechterhaltung eines Druckes von etwa 4 bis 5,5 bar innerhalb von 95 Minuten oxethyliert. Nachdem das gesamte Ethylenoxid aufgedrückt war, wurde noch 30 Minuten bei 120°C Innentemperatur nachgerührt. Das erhaltene Oxethylat lag bei Raumtemperatur als leicht gelblich-hellbraune, feste wachsartige Masse vor.

### Herstellung von Additionprodukt-oxalkylat-sulfosuccinaten

### Herstellungsbeispiel 11

In einem Rührgefäß wurden 375,0 Teile Oxethylat aus Herstellungsbeispiel 1 mit 17,35 Teile Maleinsäureanhydrid bei Raumtemperatur unter Schutzgasatmosphäre und leichtem Überdruck, um Sublimation des Maleinsäureanhydrids zu vermeiden, gemischt. Die Reaktionsmischung wurde dann zunächst für 1 Stunde auf 70°C Innentemperatur erwärmt, dann weitere 2 Stunden bei 85 bis 90°C Innentemperatur gerührt. Dabei stieg die Viskosität der Reaktionsmischung merklich an und nahm eine gelartige Konsistenz an. Anschließend ließ man eine Lösung von 22,30 Teile Natriumsulfit in 1658,0 Teile entsalztem Wasser bei 70°C Innentemperatur innerhalb von 1 Stunde zulaufen und rührte anschließend noch 3 Stunden bei dieser Temperatur, bis der Ansatz klar wasserlöslich geworden ist. Der pH-Wert der Lösung wurde dann mit NaOH-Lösung (50 %ig) auf pH 7,0 gestellt. Bei Raumtemperatur liegt das Produkt als klare, leicht gelblich gefärbte Lösung mit einer Viskosität von η = 175 mPas vor und hat eine Feststoffkonzentration von 20 Gew.-%.

### Herstellungsbeispiel 12

In einem Rührgefäß wurden 100,0 Teile Oxethylat aus Herstellungsbeispiel 5 mit 4,7 Teile Maleinsäureanhydrid bei Raumtemperatur unter Schutzgasatmosphäre und leichtem Überdruck, um Sublimation des Maleinsäureanhydrids zu vermeiden, gemischt. Die Reaktionsmischung wurde dann für 4 Stunden auf 75°C Innentemperatur erwärmt. Dabei stieg die Viskosität der Reaktionsmischung merklich an. Anschließend ließ man eine Lösung von 6,05 Teile Natriumsulfit und 443,0 Teile entsalztem Wasser bei 70°C Innentemperatur innerhalb von 5 Minuten zulaufen und rührte anschließend noch 2 Stunden bei dieser Temperatur, bis der Ansatz klar wasserlöslich wurde. Der pH-Wert der Lösung wurde dann mit NaOH-Lösung (50 %ig) auf pH 7.0 gestellt. Bei Raumtemperatur liegt das Produkt als klare, leicht gelblich gefärbte Lösung mit einer Viskosität von η =53 mPas vor und hat eine Feststoffkonzentration von 20 Gew.-%.

### Anwendungsbeispiele

### Allgemeines

Zur Herstellung der Pigmentpräparationen wurden zunächst im leeren Mahltopf einer Laborperlmühle gemäß den in den nachstehenden Beispielen aufgeführten Rezepturen die Bestandteile ohne das jeweilige Pigment homogenisiert. Mit einer Sägezahnscheibe wurde dann das pulverförmige Pigment eingearbeitet und dabei die Menge Wasser so gewählt, dass ein homogener, gut rührbarer Teig entstand. Anschließend wurden Mahlkörper zugegeben und die Mahlung gestartet. Nach dem ersten Durchmischen des Mahlmediums zu Beginn der Mahlung wurde die optimale Mahlviskosität durch Zugabe von Wasser entsprechend eingestellt. Nach der Mahlung wurde der Mahlkörper z.B. durch Filtration und/oder Zentrifugation abgetrennt.
Zur Eignungsprüfung wurden die Pigmentpräparationen 1 bis 5 %ig in unterschiedliche, kommerziell erhältliche Standardweißdispersionsfarben eingerührt, in dünnem Film appliziert und danach coloristisch ausgewertet (Weißaufhellung).
Ebenso kann eine Einarbeitung in einen Prüflack zur Beurteilung der Lackverträglichkeit der Pigmentpräparation durchgeführt werden.
Neben der Einarbeitung der Pigmentpräparation in die Weißdispersionsfarbe oder den Prüflack durch Einrühren mit einem Spatel wurde eine analoge Probe durch Einrühren mit einer Dissolverscheibe hergestellt. Beide Proben wurden bezüglich der Farbstärke miteinander verglichen. Dabei deuten Werte nahe bei 100% auf ausgezeichnete Dispergierung und hohe Dispersionsfarben- und Lackverträglichkeit der Pigmentpräparation hin.
Zur Prüfung der Verteilbarkeit und der Flockungsbeständigkeit im Anwendungsmedium wurde ein Teil des Films nach kurzem Antrocknen mit einem Pinsel oder mit einem Finger unter mäßigem Druck wiederholt nachgerieben. Lässt sich die Pigmentpräparation nur unbefriedigend im Prüfmedium verteilen oder findet beim Einbringen der Präparation in das Prüfmedium ein Flockulationsprozess statt, so werden flockulierte und agglomerierte Pigmentpartikel durch die durch Reibung auf den Film ausgeübte Scherkraft zumindest teilweise entflockuliert und entagglomeriert. Die so behandelte Fläche weist dann entweder eine höhere Farbstärke und/oder einen unregelmäßigeren oder ungleichen Farbton im Vergleich zur ungeriebenen Fläche auf. Dieses als "Rub-out Test" bezeichnete Prüfverfahren eignet sich als einfaches, aber meist sehr sensitives Verfahren, um die Qualität bezüglich der Verteilbarkeit und der Flockungsbeständigkeit einer Pigmentpräparation zu beurteilen. Ein derartiger Test ist in der Literatur vielfach beschrieben, z.B. in FARBE & LACKE 100, Jahrgang 6/2000, 51-61.

Zur Prüfung der Lagerstabilität wird eine Probe der Pigmentpräparation bei 50-60°C in einem verschlossenem Gefäß für 4 bis 5 Wochen warmgelagert. Die Viskosität sowie die coloristischen Daten der Proben werden sowohl vor als auch nach dieser Lagerung gemessen. Bleibt die Präparation fließfähig oder ändert sich die Rheologie und die Coloristik nur wenig, ist dies ebenfalls ein Indiz für die hohe Dispergiergüte, die mit den erfindungsgemäßen Dispergierhilfsmitteln erreicht werden kann.

### Anwendungsbeispiel 1

29 Teile C.I. Pigment Violett 23, 12 Teile Dispergierhilfsmittel aus Herstellungsbeispiel 1, 20 Teile Glykol, 0.2 Teile Konservierungsmittel sowie 38,8 Teile entsalztes Wasser werden bei 35 bis 38°C mittels einer DCP Super Flow Perlmühle (Fa. Drais) mit 110 Teile Zirkonoxid Perlen (d = 0.6 bis 0.9 mm), 2 Passagen (jeweils 9 Minuten Verweildauer in der Mahlzone) gemahlen. Die Pigmentpräparation hat eine hohe Farbstärke mit sehr reinem Farbton, erweist sich als gut fließfähig (η = 499 mPas) sowie als lagerstabil, d.h. die Probe bleibt trotz der Warmlagerung für 5 Wochen bei 50°C gut fließfähig (η = 1159 mPas). Die Hand-Rührer Verteilung von 100 % in der Weißaufhellung (1%ig) ist ein Beweis für die ausgezeichnete Dispergierung und die hohe Dispersionsfarbenverträglichkeit der Pigmentpräparation. Die Pigmentpräparation ist ausgezeichnet eintrocknungsbeständig. Bei den Weißaufhellungen (1 %ig) zeigen sich außerdem keinerlei Rub-out Effekte, d.h. die geriebene Fläche der Ausfärbungen weisen eine identische Farbstärke sowie keine Unregelmäßigkeiten im Farbton auf.

### Anwendungsbeispiel 2

Verwendet man in Anwendungsbeispiel 1 das Dispergierhilfsmittel aus Herstellungsbeispiel 2, so erhält man eine Pigmentpräparation mit ebenso guten rheologischen Eigenschaften (Viskosität vor der Warmlagerung n = 507 mPas, gute Fließfähigkeit nach der Warmlagerung für 5 Wochen) sowie mit vergleichbaren coloristischen Eigenschaften in den Weißaufhellungen (1 %ig).

### Anwendungsbeispiel 3

Verwendet man in Anwendungsbeispiel 1 das Dispergierhilfsmittel aus Herstellungsbeispiel 3, so erhält man eine Pigmentpräparation mit ebenso guten rheologischen Eigenschaften (Viskosität vor der Warmlagerung η = 441 mPas, gute Fließfähigkeit nach der Warmlagerung für 5 Wochen bei 50°C) sowie vergleichbaren coloristischen Eigenschaften in den Weißaufhellungen (1 %ig).

### Anwendungsbeispiel 4

Verwendet man in Anwendungsbeispiel 1 das Dispergierhilfsmittel aus Herstellungsbeispiel 4, so erhält man eine Pigmentpräparation mit ebenso guten rheologischen Eigenschaften (Viskosität vor der Warmlagerung η = 384 mPas, gute Fließfähigkeit nach der Warmlagerung für 5 Wochen bei 50°C) sowie vergleichbaren coloristischen Eigenschaften in den Weißaufhellungen (1 %ig).

### Anwendungsbeispiel 5

Verwendet man in Anwendungsbeispiel 1 das Dispergierhilfsmittel aus Herstellungsbeispiel 5, so erhält man eine Pigmentpräparation mit etwas höherer Viskosität (Viskosität vor der Warmlagerung η = 2448 mPas), aber sehr guten coloristischen Eigenschaften in den Weißaufhellungen (1 %ig).

### Anwendungsbeispiel 6

Verwendet man in Anwendungsbeispiel 1 das Dispergierhilfsmittel aus Herstellungsbeispiel 6, so erhält man eine Pigmentpräparation mit guten rheologischen Eigenschaften (Viskosität vor der Warmlagerung η = 1448 mPas, ausreichende Fließfähigkeit nach der Warmlagerung für 5 Wochen bei 50°C) sowie vergleichbaren coloristischen Eigenschaften in den Weißaufhellungen (1 %ig).

### Anwendungsbeispiel 7

Verwendet man in Anwendungsbeispiel 1 das Dispergierhilfsmittel aus Herstellungsbeispiel 7, so erhält man eine Pigmentpräparation mit ähnlich guten rheologischen Eigenschaften (Viskosität vor der Warmlagerung η = 1057 mPas, ausreichende Fließfähigkeit nach der Warmlagerung für 5 Wochen bei 50°C) sowie vergleichbaren coloristischen Eigenschaften in den Weißaufhellungen (1 %ig).

### Anwendungsbeispiel 8

Verwendet man in Anwendungsbeispiel 1 das Dispergierhilfsmittel aus Herstellungsbeispiel 8, so erhält man eine Pigmentpräparation mit ebenso guten rheologischen Eigenschaften (Viskosität vor der Warmlagerung η = 809 mPas, gute Fließfähigkeit nach der Warmlagerung für 5 Wochen bei 50°C) sowie vergleichbaren coloristischen Eigenschaften in den Weißaufhellungen (1 %ig).

### Anwendungsbeispiel 9

40 Teile C.I. Pigment Rot 146, 14 Teile Dispergierhilfsmittel aus Herstellungsbeispiel 1, 5 Teile Harnstoff, 13 Teile Glykol, 0,2 Teile Konservierungsmittel sowie 27,8 Teile entsalztes Wasser wurden bei 35 bis 40°C mittels einer Laborperlmühle (Fa. Drais) mit 275 Teile Glasperlen (d = 1 mm) 60 Minuten gemahlen. Die Pigmentpräparation hatte eine hohe Farbstärke mit sehr reinem Farbton, erweist sich als gut fließfähig (η = 268 mPas) sowie als lagerstabil, d.h. die Probe blieb trotz Warmlagerung für 5 Wochen bei 50°C relativ gut fließfähig (η = 1964 mPas). Die Hand-Rührer Verteilung von 101 % in der Weißaufhellung (1%ig) ist ein Beweis für die ausgezeichnete Dispergierung und die hohe Dispersionsfarbenverträglichkeit der Pigmentpräparation. Die Pigmentpräparation war ausgezeichnet eintrocknungsbeständig. Bei den Weißaufhellungen (1 %ig) zeigten sich außerdem keinerlei Rub-out Effekte, d.h. die geriebene Fläche der Ausfärbungen wiesen eine identische Farbstärke sowie keine Unregelmäßigkeiten im Farbton auf.

### Anwendungsbeispiel 10

70 Teile C.I. Pigment Grün 50, 13 Teile Dispergierhilfsmittel aus Herstellungsbeispiel 1, 0,4 Teile Oleylamin, 14 Teile Glykol, 0,2 Teile Konservierungsmittel sowie 2,4 Teile entsalztes Wasser wurden bei 35 bis 40°C mittels einer Laborperlmühle (Fa. Drais) mit 275 Teile Glasperlen (d = 1 mm) 60 Minuten gemahlen. Die Pigmentpräparation hatte eine hohe Farbstärke mit sehr reinem Farbton, erweist sich für eine Präparation eines anorganischen Pigments als gut fließfähig (η = 2643 mPas) sowie als lagerstabil, d.h. die Probe blieb trotz der Warmlagerung für 5 Wochen bei 50°C relativ gut fließfähig (η = 3412 mPas). Die Hand-Rührer Verteilung von 100 % in der Weißaufhellung (5 %ig) ist ein Beweis für die ausgezeichnete Dispergierung und die hohe Dispersionsfarbenverträglichkeit der Pigmentpräparation. Die Pigmentpräparation war ausgezeichnet eintrocknungsbeständig. Bei den Weißaufhellungen (5 %ig) zeigten sich außerdem keinerlei Rub-out Effekte, d.h. die geriebene Fläche der Ausfärbungen wiesen eine identische Farbstärke sowie keine Unregelmäßigkeiten im Farbton auf.

### Anwendungsbeispiel 11

42 Teile C.I. Pigment Schwarz 7, 6.0 Teile Dispergierhilfsmittel aus Herstellungsbeispiel 1, 20 Teile Glykol, 0.2 Teile Konservierungsmittel sowie 31,8 Teile entsalztes Wasser wurden bei 35 bis 40°C mittels einer Laborperlmühle (Fa. Drais) mit 275 Teile Glasperlen (d = 1 mm) 40 Minuten gemahlen. Die Pigmentpräparation hatte eine hohe Farbstärke mit sehr reinem Farbton, erweist sich für eine Ruß-Präparation als hervorragend fließfähig (η = 582 mPas) sowie als lagerstabil, d.h. die Probe blieb trotz Warmlagerung für 5 Wochen bei 50°C relativ gut fließfähig (η = 1063 mPas). Die Hand-Rührer Verteilung von 100 % in der Weißaufhellung (1 %ig) ist ein Beweis für die ausgezeichnete Dispergierung und die hohe Dispersionsfarbenverträglichkeit der Pigmentpräparation. Die Pigmentpräparation war ausgezeichnet eintrocknungsbeständig. Bei den Weißaufhellungen (1 %ig) zeigten sich außerdem keinerlei Rub-out Effekte, d.h. die geriebene Fläche der Ausfärbungen wiesen eine identische Farbstärke sowie keine Unregelmäßigkeiten im Farbton auf.

### Anwendungsbeispiel 12

42 Teile C.I. Pigment Schwarz 7, 6.5 Teile Dispergierhilfsmittel aus Herstellungsbeispiel 9, 20 Teile Glykol, 0.2 Teile Konservierungsmittel sowie 31,3 Teile entsalztes Wasser wurden bei 35 bis 40°C mittels einer Laborperlmühle (Fa. Drais) mit 275 Teile Glasperlen (d = 1 mm) 20 Minuten gemahlen.

Die Pigmentpräparation hatte eine hohe Farbstärke mit sehr reinem Farbton, erweist sich für eine Ruß-Präparation als hervorragend fließfähig (η = 350 mPas) sowie als lagerstabil, d.h. die Probe blieb trotz Warmlagerung für 5 Wochen bei 50°C relativ gut fließfähig (η = 440 mPas). Die Hand-Rührer Verteilung von 100 % in der Weißaufhellung (1 %ig) ist ein Beweis für die ausgezeichnete Dispergierung und die hohe Dispersionsfarbenverträglichkeit der Pigmentpräparation. Die Pigmentpräparation war ausgezeichnet eintrocknungsbeständig. Bei den Weißaufhellungen (1 %ig) zeigten sich außerdem keinerlei Rub-out Effekte, d.h. die geriebene Fläche der Ausfärbungen wiesen eine identische Farbstärke sowie keine Unregelmäßigkeiten im Farbton auf.

### Anwendungsbeispiel 13

35 Teile C.I. Pigment Yellow 83, 8 Teile Dispergierhilfsmittel aus Herstellungsbeispiel 10, 15 Teile Glykol, 0,2 Teile Konservierungsmittel sowie 41,8 Teile entsalztes Wasser werden bei 35 bis 38°C mittels einer DCP Super Flow Perlmühle (Fa. Drais) mit 110 Teile Zirkonoxid Perlen (d = 0,6 bis 0,9 mm), 2 Passagen (jeweils 9 Minuten Verweildauer in der Mahlzone) gemahlen. Die Pigmentpräparation hat eine hohe Farbstärke mit sehr reinem Farbton, erweist sich als gut fließfähig (η = 91 mPas) sowie als lagerstabil, d.h. die Probe bleibt trotz der Warmlagerung für 5 Wochen bei 50°C gut fließfähig (η = 78 mPas). Die Hand-Rührer Verteilung von 100 % in der Weißaufhellung (1 %ig) ist ein Beweis für die ausgezeichnete Dispergierung und die hohe Dispersionsfarbenverträglichkeit der Pigmentpräparation. Die Pigmentpräparation ist ausgezeichnet eintrocknungsbeständig. Bei den Weißaufhellungen (1 %ig) zeigen sich außerdem keinerlei Rub-out Effekte, d.h. die geriebene Fläche der Ausfärbungen weisen eine identische Farbstärke sowie keine Unregelmäßigkeiten im Farbton auf.
Die Pigmentpräparation eignete sich hervorragend zur Herstellung von Drucktinten für den Ink-Jet-Druck. Es konnten auf unterschiedlichen Papieren Drucke mit hervorragender Farbbrillanz erzeugt werden.

### Anwendungsbeispiel 14

40 Teile C.I. Pigment Gelb 97, 14 Teile Dispergierhilfsmittel aus Herstellungsbeispiel 1, 15 Teile Glykol, 0.2 Teile Konservierungsmittel sowie 30,8 Teile entsalztes Wasser wurden bei 35 bis 40°C mittels einer Laborperlmühle (Fa. Drais) mit 275 Teile Glasperlen (d = 1 mm) 60 Minuten gemahlen. Die Pigmentpräparation hatte eine hohe Farbstärke mit sehr reinem Farbton, erweist sich als ausgezeichnet fließfähig (η = 510 mPas) sowie als lagerstabil, d.h. die Probe blieb trotz Warmlagerung für 5 Wochen bei 50°C relativ gut fließfähig (η = 549 mPas). Die Hand-Rührer Verteilung von 100% in der Weißaufhellung (1 %ig) ist ein Beweis für die ausgezeichnete Dispergierung und die hohe Dispersionsfarbenverträglichkeit der Pigmentpräparation. Die Pigmentpräparation war ausgezeichnet eintrocknungsbeständig. Bei den Weißaufhellungen (1 %ig) zeigten sich außerdem keinerlei Rub-out Effekte, d.h. die geriebene Fläche der Ausfärbungen wiesen eine identische Farbstärke sowie keine Unregelmäßigkeiten im Farbton auf.

### Anwendungsbeispiel 15

33 Teile C.I. Pigment Gelb 154, 7,5 Teile Dispergierhilfsmittel aus Herstellungsbeispiel 1, 17 Teile Glykol, 0,2 Teile Konservierungsmittel sowie 42,3 Teile entsalztes Wasser wurden bei 35 bis 40°C mittels einer Laborperlmühle (Fa. Drais) mit 275 Teile Glasperlen (d = 1 mm) 60 Minuten gemahlen. Die Pigmentpräparation hatte eine hohe Farbstärke mit sehr reinem Farbton, erweist sich als sehr gut fließfähig (η = 686 mPas) sowie als lagerstabil, d.h. die Probe blieb trotz Warmlagerung für 5 Wochen bei 50°C relativ gut fließfähig (η = 1257 mPas). Die Hand-Rührer Verteilung von 101 % in der Weißaufhellung (1 %ig) ist ein Beweis für die ausgezeichnete Dispergierung und die hohe Dispersionsfarbenverträglichkeit der Pigmentpräparation. Die Pigmentpräparation war ausgezeichnet eintrocknungsbeständig. Bei den Weißaufhellungen (1 %ig) zeigten sich außerdem keinerlei Rub-out Effekte, d.h. die geriebene Fläche der Ausfärbungen wiesen eine identische Farbstärke sowie keine Unregelmäßigkeiten im Farbton auf.

### Anwendungsbeispiel 16

48 Teile C.I. Pigment Rot 112, 32,25 Teile Dispergierhilfsmittel aus Herstellungsbeispiel 11, 9,5 Teile Glykol, 0,2 Teile Konservierungsmittel sowie 10,05 Teile entsalztes Wasser wurden bei 35°C mittels einer Laborperlmühle (Fa. Drais) mit 275 Teile Glasperlen (d = 1 mm) 80 Minuten gemahlen. Die Pigmentpräparation hatte eine hohe Farbstärke mit sehr reinem Farbton und erweist sich als gut lagerstabil, d.h. die Probe blieb trotz Warmlagerung für 4 Wochen bei 50°C noch fließfähig. Die Pigmentpräparation zeichnete sich durch eine sehr niedrige Antrocknungs- und Austrocknungsneigung aus. Bei den Weißaufhellungen (1%ig) zeigten sich außerdem keinerlei Rub-Out Effekte, d.h. die geriebene Fläche der Ausfärbungen wiesen eine identische Farbstärke sowie keine Unregelmäßigkeiten im Farbton auf. Aufgrund des anionischen Charakters der Pigmentpräparation eignet sie sich hervorragend zur Papiermassefärbung unter Verwendung polykationischer Flockulationsreagentien, wobei hohe Farbstärke sowie brillante Färbungen erreicht werden können.

### Anwendungsbeispiel 17

Verwendet man in Anwendungsbeispiel 16 das Dispergierhilfsmittel aus Herstellungsbeispiel 12, so erhält man eine Pigmentpräparation mit ähnlich guten Eigenschaften.

### Anwendungsbeispiel 18

40 Teile C.I. Pigment Gelb 74, 7,0 Teile Dispergierhilfsmittel aus Herstellungsbeispiel 1, 0,6 Teile Konservierungsmittel sowie 52,4 Teile entsalztes Wasser wurden bei 35°C mittels einer Laborperlmühle (Fa. Drais) mit 275 Teile Glasperlen (d = 1 mm) 60 Minuten gemahlen. Die Pigmentpräparation hatte eine hohe Farbstärke mit sehr reinem Farbton, erweist sich als ausgezeichnet fließfähig (η = 64 mPas) sowie als sehr gut lagerstabil, d.h. die Probe blieb trotz Warmlagerung für 5 Wochen bei 50°C fließfähig (η = 673 mPas). Die Hand-Rührer Verteilung von 100 % in der Weißaufhellung (1 %ig) ist ein Beweis für die ausgezeichnete Dispergierung und die hohe Dispersionsfarbenverträglichkeit der Pigmentpräparation.

Die Pigmentpräparation zeichnete sich durch eine sehr niedrige Antrocknungsund Austrocknungsneigung aus. Bei den Weißaufhellungen (1 %ig) zeigten sich außerdem keinerlei Rub-Out Effekte, d.h. die geriebene Fläche der Ausfärbungen wiesen eine identische Farbstärke sowie keine Unregelmäßigkeiten im Farbton auf.

### Anwendungsbeispiel 19

30 Teile C.I. Pigment Gelb 154, 9,0 Teile Dispergierhilfsmittel aus Herstellungsbeispiel 1, 7,5 Teile Polyethylenglykol (Molekulargewicht 500), 0,6 Teile Konservierungsmittel sowie 52.9 Teile entsalztes Wasser wurden bei 35 bis 40°C mittels einer Laborperlmühle (Fa. Drais) mit 275 Teile Glasperlen (d = 1 mm) 60 Minuten gemahlen. Die Pigmentpräparation hatte eine hohe Farbstärke mit sehr reinem Farbton, erweist sich als ausgezeichnet fließfähig (η = 246 mPas) sowie als lagerstabil, d.h. die Probe blieb trotz der Warmlagerung für 5 Wochen bei 50°C fließfähig (η = 855 mPas). Die Hand-Rührer Verteilung von 100 % in der Weißaufhellung (1 %ig) ist ein Beweis für die ausgezeichnete Dispergierung und die hohe Dispersionsfarbenverträglichkeit der Pigmentpräparation. Die Pigmentpräparation zeichnete sich besonders durch eine sehr niedrige Antrocknungs- und Austrocknungsneigung aus. Bei den Weißaufhellungen (1 %ig) zeigten sich außerdem keinerlei Rub-Out Effekte, d.h. die geriebene Fläche der Ausfärbungen wiesen eine identische Farbstärke sowie keine Unregelmäßigkeiten im Farbton auf.

## Patentansprüche

1. Additionsverbindung der Formel (1), 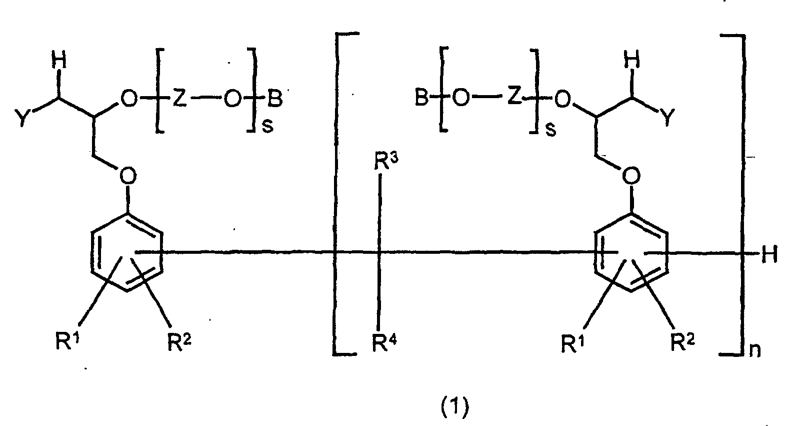 in der
n eine Zahl von 1 bis 10,
R¹, R² gleich oder verschieden sind und jeweils ein Wasserstoffatom oder ein gesättigter oder ungesättigter aliphatischer Rest mit 1 bis 4 Kohlenstoffatomen sind;
R³, R⁴ gleich oder verschieden sind und jeweils ein Wasserstoffatom oder Alkyl mit 1 bis 3 Kohlenstoffatomen sind, und das Brückenglied 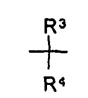 jeweils in ortho- oder meta-Position zum phenolischen. O-Atom steht;
Z für eine Gruppe -CH₂-CH₂-, -CH₂-CH(CH₃)-, -CH(CH₃)-CH₂- oder eine Kombination davon steht,
s für eine Zahl zwischen 1 und 200 steht,
B für Wasserstoff, -CO-CH=CH-COOM, COCH(SO₃M)CH₂COOM, -CO-CH₂-CH(SO₃M)-COOM, -SO₃M, -SO₂M und/oder -PO₃MM steht, wobei M ein Kation ist; und
Y ein Rest eines Amins der Formel (4) ist 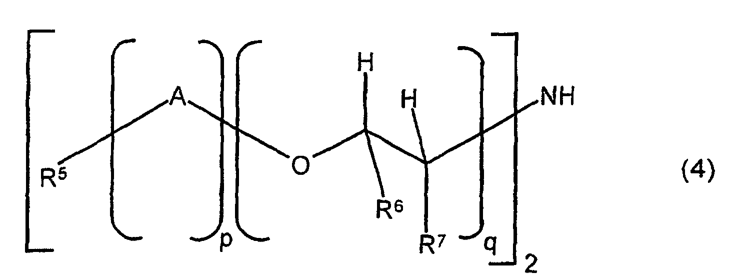
in der
R⁵ für einen gesättigten oder ein- oder mehrfach ungesättigten aliphatischen Rest mit 6 bis 30 Kohlenstoffatomen steht,
A für Phenylen oder Naphthylen steht,
p Null oder 1 ist,
R⁶, R⁷ jeweils Wasserstoff oder ein Methylrest sind, jedoch nicht gleichzeitig ein Methylrest, und
q eine Zahl von 0 bis 40 ist;
und/oder Y ein Rest eines Amins der allgemeinen Formel (5) ist 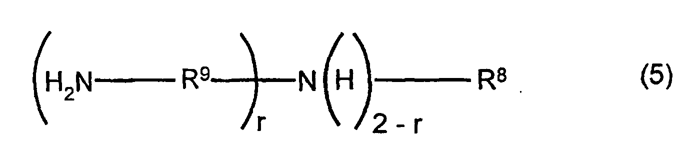 in der
r für eine Zahl von 0 bis 2 steht,
R⁸ für einen gesättigten oder ein- oder mehrfach ungesättigten aliphatischen Rest mit 8 bis 24 Kohlenstoffatomen steht und
R⁹ für eine Alkylengruppe mit 2 bis 6 Kohlenstoffatomen steht,
und/oder Y ein Rest der Amine der allgemeinen Formeln (6), (7), (8) und/oder (9) ist 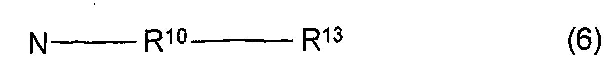 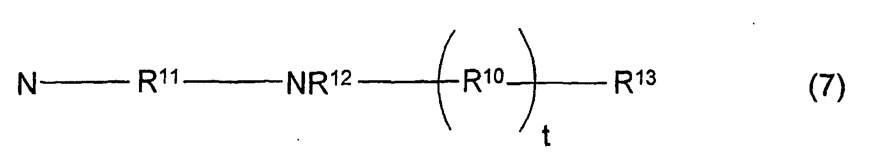 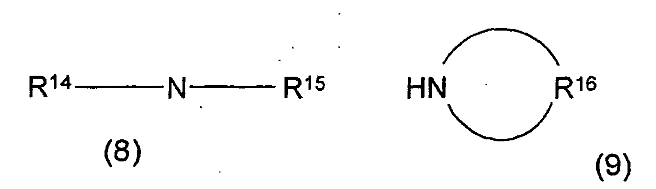 worin
t für 0 oder 1 steht,
R¹⁰ für eine Alkylengruppe mit 1 bis 10 Kohlenstoffatomen,
R¹¹ für eine Alkylengruppe mit 2 bis 6 Kohlenstoffatomen,
R¹² für ein Wasserstoffatom oder eine Alkylgruppe mit 1 bis 4 Kohlenstoffatomen,
R¹³ für ein gesättigtes oder ein- oder mehrfach ungesättigtes, ein- oder mehrkerniges heterocyclisches oder carbocyclisches Ringsystem mit 3 bis 18 C-Atomen, das gegebenenfalls noch 1, 2 oder 3 weitere Heteroatome aus der Gruppe N, S und O im Ring enthält, wobei das Ringsystem durch einen oder mehrere der Reste R¹⁷, Halogenatome, -OR¹⁷, -NR¹⁷R¹⁸, -COOR¹⁷, -CONR¹⁷R¹⁸, -NR¹⁷-COR¹⁸, -NO₂, -CN oder CF₃ substituiert sein kann, wobei R¹⁷ und R¹⁸ unabhängig voneinander für Wasserstoff oder einen Alkylrest mit 1 bis 10 Kohlenstoffatomen,
R¹⁴, R¹⁵ gleich oder verschieden sind und jeweils für einen gesättigten oder ein- oder mehrfach ungesättigten aliphatischen Rest mit 1 bis 24 Kohlenstoffatomen stehen; und
R¹⁶ zusammen mit dem Stickstoffatom der Formel (9) ein 5- bis 7-gliedriges heterocyclisches Ringsystem bildet, das gegebenenfalls noch 1, 2 oder 3 weitere Heteroatome aus der Gruppe N, S und O im Ring enthält, wobei das Ringsystem durch einen oder mehrere der Reste R¹⁷, Halogenatome, -OR¹⁷, -NR¹⁷R¹⁸, -COOR¹⁷, -CONR¹⁷R¹⁸, -NR¹⁷-COR¹⁸, -NO₂, -CN oder CF₃ substituiert sein kann.

2. Additionsverbindung nach Anspruch 1, **dadurch gekennzeichnet, dass** n eine Zahl von 1,2 bis 6 bedeutet.

3. Additionsverbindung nach Anspruch 1 oder 2, **dadurch gekennzeichnet, dass** s eine Zahl von 5 bis 100, insbesondere von 10 bis 40, bedeutet.

4. Additionsverbindung nach einem oder mehreren der Ansprüche 1 bis 3, **dadurch gekennzeichnet, dass** R⁵ C₆-C₁₈-Alkyl oder C₆-C₁₈-Alkenyl ist.

5. Additionsverbindung nach einem oder mehreren der Ansprüche 1 bis 4, **dadurch gekennzeichnet, dass** R⁹ Propylen oder Butylen bedeutet.

6. Additionsverbindung nach einem oder mehreren der Ansprüche 1 bis 5, **dadurch gekennzeichnet, dass** R¹¹ Ethylen oder Propylen bedeutet.

7. Additionsverbindung nach einem oder mehreren der Ansprüche 1 bis 5, **dadurch gekennzeichnet, dass** die Verbindung der Formel (9) Pyrazol, Triazol, Piperidin, Oxazolidin, Imidazol, Pyrrol, Pyrrolidin, Carbazol, Dihydropyrrol, Dihydropyrazol, Oxazolidon, Morpholin, Dihydropyridin oder Azepin bedeutet.

8. Verfahren zur Herstellung einer Additionsverbindung nach einem oder mehreren der Ansprüche 1 bis 7, indem man eine Epoxyverbindung der Formel (2) 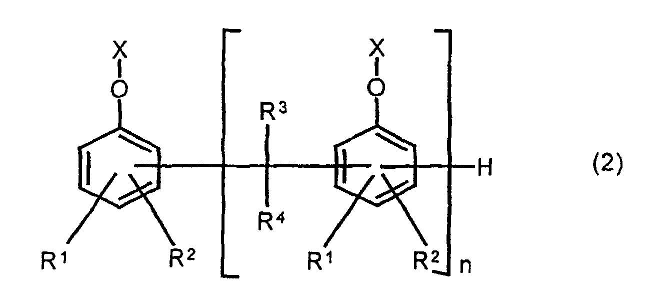 worin X die Bedeutung 2,3-Epoxypropyl hat, mit einem oder mehreren Aminen der Formeln (4) bis (9) umsetzt, oxalkyliert und das entstandene Oxalkylat gegebenenfalls mit Maleinsäureanhydrid halbverestert und gegebenenfalls sulfiert.

9. Verwendung einer Additionsverbindung nach einem oder mehreren der Ansprüche 1 bis 7 zum Dispergieren von Feststoffen, insbesondere Farbstoffen oder Pigmenten.

10. Verwendung nach Anspruch 9 zum Dispergieren in wässrigen Flüssigkeiten.

11. Pigmentpräparation, enthaltend
a) 1 bis 80 Gew.-% eines oder mehrerer Pigmente;
b) 1 bis 50 Gew.-% mindestens einer Additionsverbindung nach einem oder mehreren der Ansprüche 1 bis 8;
c) 0 bis 50 Gew.-% an üblichen Zusatzstoffen; und
d) 10 bis 80 Gew.-% Wasser,
jeweils bezogen auf das Gesamtgewicht (100 Gew.-%) der Pigmentpräparation.

12. Pigmentpräparation nach Anspruch 11, **dadurch gekennzeichnet, dass** das Pigment aus der Klasse der Monoazopigmente, Disazopigmente, verlackten Azopigmente, Triphenylmethanpigmente, Thioindigopigmente, Thiazinindigopigmente, Perylenpigmente, Perinonpigmente, Anthanthronpigmente, Diketopyrrolopyrrolpigmente, Dioxazinpigmente, Chinacridonpigmente, Phthalocyaninpigmente, Isoindolinonpigmente, Isoindolinpigmente, Benzimidazolonpigmente, Naphtholpigmente, Chinophthalonpigmente oder Ruße ist.

13. Pigmentpräparation nach Anspruch 11, **dadurch gekennzeichnet, dass** das Pigment aus der Klasse der Titandioxide, Zinksulfide, Eisenoxide, Chromoxide, Ultramarin, Nickel- oder Chromantimontitanoxide, Cobaltoxide oder Bismutvanadate ist.

14. Verfahren zur Herstellung einer Pigmentpräparation nach einem der Ansprüche 11 bis 13, indem die Verbindung(en) der Formel (1), und gegebenenfalls die weiteren Zusatzstoffe, bei der Pigmentsynthese, der Mahlung, Dispergierung oder Finish des Pigments zugegeben werden.

## Claims

1. An addition compound of the formula (1) 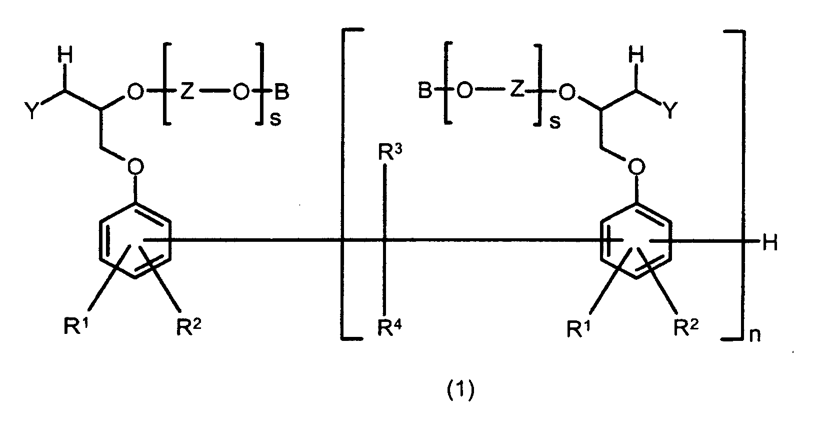 in which
n is a number from 1 to 10;
R¹, R² are identical or different and are each a hydrogen atom or a saturated or unsaturated aliphatic radical having 1 to 4 carbon atoms;
R³, R⁴ are identical or different and are each a hydrogen atom or alkyl having 1 to 3 carbon atoms, and the bridge member 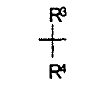 is in each case positioned ortho or meta in relation to the phenolic oxygen atom;
Z is a group -CH₂-CH₂-, -CH₂-CH (CH₃)-, -CH (CH₃)-CH₂- or a combination thereof,
s is a number between 1 and 200,
B is hydrogen, -CO-CH=CH-COOM,
-COCH(SO₃M)CH₂COOM, -CO-CH₂-CH (SO₃M)-COOM,
-SO₃M, -SO₂M and/or -PO₃MM, M being a cation;
and
Y is a radical of an amine of formula (4) 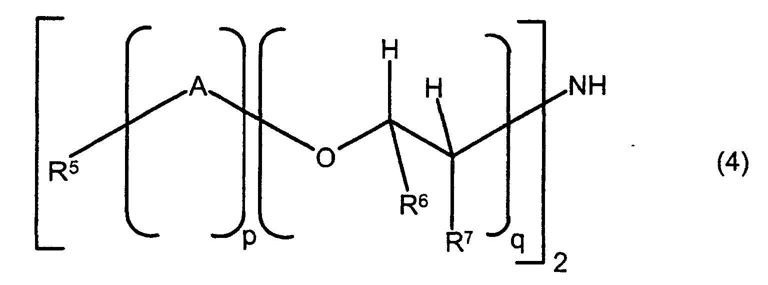
in which
R⁵ is a saturated or singly or multiply unsaturated aliphatic radical having 6 to 30 carbon atoms,
A is phenylene or naphthylene,
p is zero or 1,
R⁶, R⁷ are each hydrogen or a methyl radical, but are not simultaneously a methyl radical, and
q is a number from 0 to 40;
and/or Y is a radical of an amine of the formula (5) 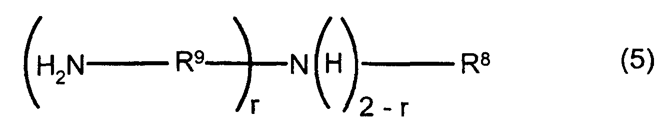 in which
r is a number from 0 to 2,
R⁸ is a saturated or singly or multiply unsaturated aliphatic radical having 8 to 24 carbon atoms, and
R⁹ is an alkylene group having 2 to 6 carbon atoms, and/or Y is a radical of the amines of the formulae (6), (7), (8) and/or (9) 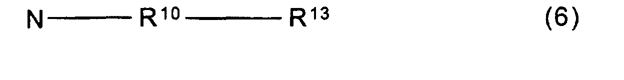 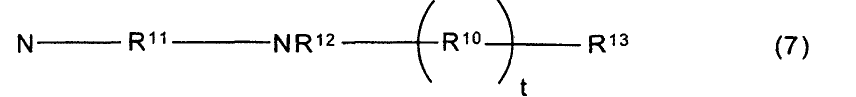 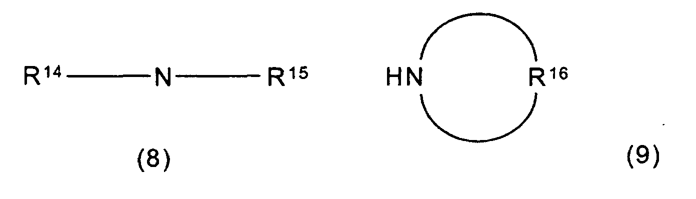
in which
t is 0 or 1,
R¹⁰ is an alkylene group having 1 to 10 carbon atoms,
R¹¹ is an alkylene group having from 2 to 6 carbon atoms,
R¹² is a hydrogen atom or an alkyl group having 1 to 4 carbon atoms,
R¹³ is a saturated or a singly or multiply unsaturated, mononuclear or polynuclear heterocyclic or carbocyclic ring system having 3 to 18 carbon atoms which if desired also contains in the ring 1, 2 or 3 further heteroatoms from the group N, Sand O, it being possible for the ring system to be substituted by one or more of the radicals R¹⁷, halogen atoms, -OR¹⁷, -NR¹⁷R¹⁸, -COOR¹⁷, -CONR¹⁷R¹⁸, -NR¹⁷-COR¹⁸, -NO₂, -CN or CF₃, R¹⁷ and R¹⁸ independently of one another being hydrogen or an alkyl radical having 1 to 10 carbon atoms,
R¹⁴, R¹⁵ are identical or different and are each a saturated or singly or multiply unsaturated aliphatic radical having 1 to 24 carbon atoms; and
R¹⁶ together with the nitrogen atom of the formula (9) forms a 5- to 7-membered heterocyclic ring system which if desired also contains in the ring 1, 2 or 3 further heteroatoms from the group N, S and O, it being possible for the ring system to be substituted by one or more of the radicals R¹⁷, halogen atoms, -OR¹⁷, -NR¹⁷R¹⁸, -COOR¹⁷, -CONR¹⁷R¹⁸, -NR¹⁷-COR¹⁸, -NO₂, -CN or CF₃.

2. An addition compound as claimed in claim 1, wherein n is a number from 1.2 to 6.

3. An addition compound as claimed in claim 1 or 2, wherein s is a number from 5 to 100, in particular from 10 to 40.

4. An addition compound as claimed in one or more of claims 1 to 3, wherein R⁵ is C₆-C₁₈-alkyl or C₆-C₁₈-alkenyl.

5. An addition compound as claimed in one or more of claims 1 to 4, wherein R⁹ is propylene or butylene.

6. An addition compound as claimed in one or more of claims 1 to 5, wherein R¹¹ is ethylene or propylene.

7. An addition compound as claimed in one or more of claims 1 to 5, wherein the compound of the formula (9) is pyrazole, triazole, piperidine, oxazolidine, imidazole, pyrrole, pyrrolidine, carbazole, dihydropyrrole, dihydropyrazole, oxazolidone, morpholine, dihydropyridine or azepine.

8. A process for preparing an addition compound as claimed in one or more of claims 1 to 7, by reacting an epoxy compound of the formula (2) 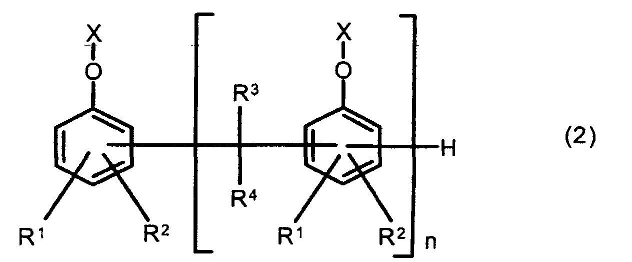 in which X has the definition 2,3-epoxypropyl, with one or more amines of the formulae (4) to (9), oxalkylating the product, and subjecting the resulting oxalkylate, where appropriate, to monoesterification with maleic anhydride and, where appropriate, to sulfation.

9. The use of an addition compound as claimed in one or more of claims 1 to 7 for dispersing solids, especially dyes or pigments.

10. The use as claimed in claim 9 for dispersing in aqueous liquids.

11. A pigment preparation containing
a) from 1 to 80% by weight of one or more pigments;
b) from 1 to 50% by weight of at least one addition compound as claimed in one or more of claims 1 to 8;
c) from 0 to 50% by weight of customary additives; and
d) from 10 to 80% by weight of water,
based in each case on the overall weight (100% by weight) of the pigment preparation.

12. A pigment preparation as claimed in claim 11, wherein the pigment is from the class of the monoazo pigments, disazo pigments, laked azo pigments, triphenylmethane pigments, thioindigo pigments, thiazineindigo pigments, perylene pigments, perinone pigments, anthanthrone pigments, diketopyrrolopyrrole pigments, dioxazine pigments, quinacridone pigments, phthalocyanine pigments, isoindolinone pigments, isoindoline pigments, benzimidazolone pigments, naphthol pigments and quinophthalone pigments or carbon blacks.

13. A pigment preparation as claimed in claim 11, wherein the pigment is in the class of the titanium dioxides, zinc sulfides, iron oxides, chromium oxides, ultramarine, nickel or chromium antimony titanium oxides, cobalt oxides or bismuth vanadates.

14. A process for producing a pigment preparation as claimed in any of claims 11 to 13, by adding the compound(s) of the formula (1), and where appropriate the further additives, during pigment synthesis or during grinding, dispersing or finishing of the pigment.

## Revendications

1. Composé d'addition de formule (1), 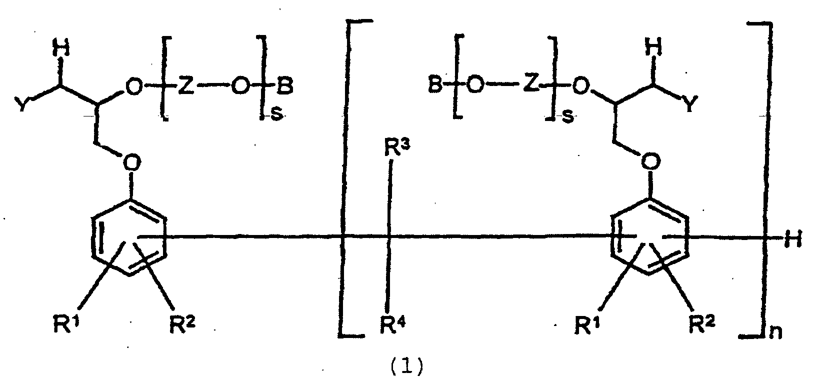 dans laquelle
n représente un nombre de 1 à 10,
R¹, R² sont identiques ou différents et représentent respectivement un atome d'hydrogène ou un groupe aliphatique saturé ou insaturé avec de 1 à 4 atomes de carbone ;
R³, R⁴ sont identiques ou différents et sont respectivement un atome d'hydrogène ou un alkyle avec de 1 à 3 atomes de carbone, et le chaînon pontant 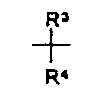 est situé respectivement en position ortho ou méta par rapport à l'atome O phénolique ;
Z représente un groupe -CH₂-CH₂-, -CH₂-CH(CH₃)-, -CH(CH₃)-CH₂- ou une combinaison de ceux-ci,
s représente un nombre entre 1 et 200,
B représente un hydrogène, -CO-CH=CH-COOM, COCH(SO₃M)CH₂COOM, -CO-CH₂-CH(SO₃M)-COOM, -SO₃M, -SO₂M et/ou -PO₃MM, dans lesquels M est un cation ; et
Y est un radical d'une amine de formule (4) 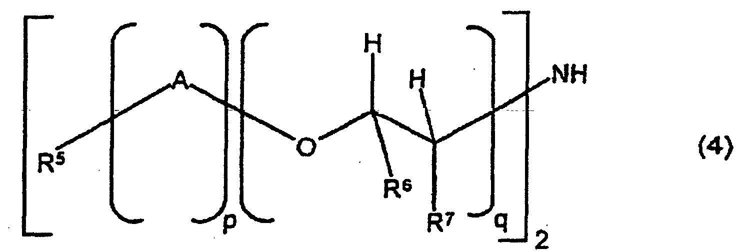
dans laquelle
R⁵ représente un groupe aliphatique saturé ou une ou plusieurs fois insaturé avec de 6 à 30 atomes de carbone,
A représente un phénylène ou naphtalylène,
p est 0 ou 1,
R⁶, R⁷ sont respectivement un hydrogène ou un groupe méthyle, ils ne sont cependant pas en même temps un groupe méthyle, et
q est un nombre de 0 à 40 ;
et/ou Y est un radical d'une amine de formule générale (5) 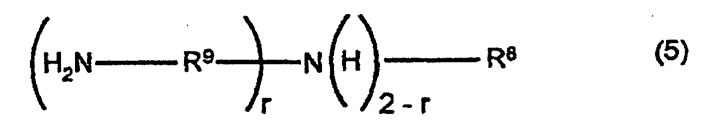 dans laquelle
r représente un nombre de 0 à 2,
R⁸ représente un groupe aliphatique saturé ou une ou plusieurs fois insaturé avec de 8 à 24 atomes de carbone et
R⁹ représente un groupe alkylène avec de 2 à 6 atomes de carbone,
et/ou Y est un radical d'une amine de formules générales (6), (7), (8) et/ou (9) 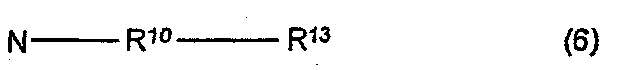 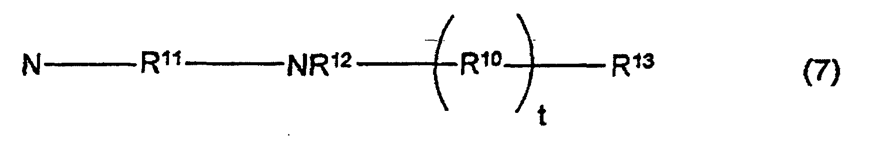 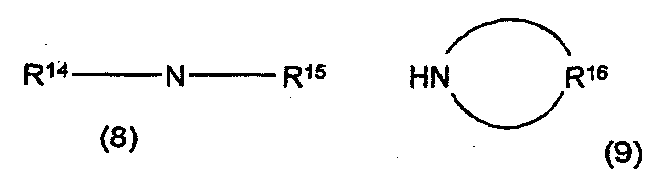 dans lesquelles
t représente 0 ou 1,
R¹⁰ représente un groupe alkylène avec de 1 à 10 atomes de carbone,
R¹¹ représente un groupe alkylène avec de 2 à 6 atomes de carbone,
R¹² représente un atome d'hydrogène ou un groupe alkyle avec de 1 à 4 atomes de carbone,
R¹³ représente un système cyclique saturé ou une ou plusieurs fois insaturé, mono- ou polycyclique hétérocyclique ou carbocyclique avec de 3 à 18 atomes de carbone, qui contient éventuellement encore 1, 2 ou 3 autres hétéro-atomes du groupe N, S et O dans le cycle, le système cyclique pouvant être substitué par un ou plusieurs des groupes R¹⁷, atomes d'halogène, -OR¹⁷, -NR¹⁷R¹⁸, -COOR¹⁷, -CONR¹⁷R¹⁸, -NR¹⁷-COR¹⁸, -NO₂, -CN ou CF₃, dans lesquels R¹⁷ et R¹⁸ indépendamment l'un de l'autre représentent un hydrogène ou un groupe alkyle avec de 1 à 10 atomes de carbone,
R¹⁴, R¹⁵ sont identiques ou différents et représentent respectivement un groupe aliphatique saturé ou une ou plusieurs fois insaturé avec de 1 à 24 atomes de carbone ; et
R¹⁶ forme avec l'atome d'azote de formule (9) un système cyclique hétérocyclique à 5 à 7 chaînons, qui contient éventuellement encore 1, 2 ou 3 autres hétéroatomes du groupe N, S et O dans le cycle, le système cyclique pouvant être substitué par un ou plusieurs des groupes R¹⁷, atomes d'halogène, -OR¹⁷, -NR¹⁷R¹⁸, -COOR¹⁷, -CONR¹⁷R¹⁸, -NR¹⁷-COR¹⁸, -NO₂, -CN ou CF₃.

2. Composé d'addition selon la revendication 1, **caractérisé en ce que** n représente un nombre de 1, 2 à 6.

3. Composé d'addition selon la revendication 1 ou 2, **caractérisé en ce que** s représente un nombre de 5 à 100, en particulier de 10 à 40.

4. Composé d'addition selon une ou plusieurs des revendications 1 à 3, **caractérisé en ce que** R⁵ est un alkyle en C₆ à C₁₈ ou alcényle en C₆ à C₁₈.

5. Composé d'addition selon une ou plusieurs des revendications 1 à 4, **caractérisé en ce que** R⁹ représente le propylène ou le butylène.

6. Composé d'addition selon une ou plusieurs des revendications 1 à 5, **caractérisé en ce que** R¹¹ représente l'éthylène ou le propylène.

7. Composé d'addition selon une ou plusieurs des revendications 1 à 5, **caractérisé en ce que** le composé de formule (9) représente le pyrazole, le triazole, la pipéridine, l'oxazolidine, l'imidazole, le pyrrole, la pyrrolidine, le carbazole, le dihydropyrrole, le dihydropyrazole, l'oxazolidone, la morpholine, la dihydropyridine ou l'azépine.

8. Procédé pour la préparation d'un composé d'addition selon une ou plusieurs des revendications 1 à 7, dans lequel on met à réagir un composé époxy de formule (2) 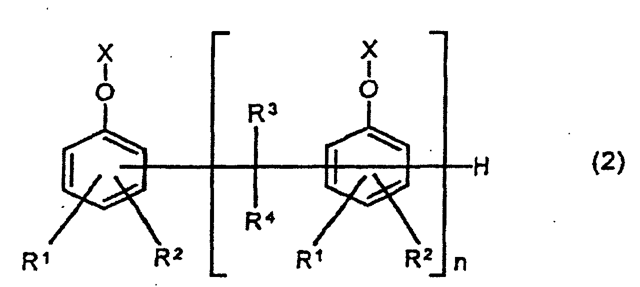 dans laquelle X représente un 2,3-époxypropyle, avec une ou plusieurs amines des formules (4) à (9), on l'oxalkyle et on réalise une hémi-estérification de l'oxalkylate produit éventuellement avec de l'anhydride d'acide maléique et on le sulfone éventuellement.

9. Utilisation d'un composé d'addition selon une ou plusieurs des revendications 1 à 7 pour la dispersion de substances solides, en particulier de colorants ou de pigments.

10. Utilisation selon la revendication 9 pour la dispersion dans des liquides aqueux.

11. Préparation de pigment, contenant
a) 1 à 80 % en poids d'un ou plusieurs pigments ;
b) 1 à 50 % en poids d'au moins un composé d'addition selon une ou plusieurs des revendications 1 à 8 ;
c) 0 à 50 % en poids d'additifs usuels ; et
d) 10 à 80 % en poids d'eau,
respectivement par rapport au poids global (100 % en poids) de la préparation de pigment.

12. Préparation de pigment selon la revendication 11, **caractérisée en ce que** le pigment est dans la classe des pigments monoazoïques, pigments disazoïques, pigments azoïques laqués, pigments triphénylméthane, pigments thioindigo, pigments thiazinindigo, pigments pérylène, pigments périnone, pigments anthraquinone, pigments dicétopyrrolopyrrole, pigments dioxazine, pigments quinacridone, pigments phtalocyanine, pigments isoindolinone, pigments isoindoline, pigments benzimidazolone, pigments naphtol, pigments quinophtalone ou noirs de carbone.

13. Préparation de pigments selon la revendication 11, **caractérisée en ce que** le pigment est dans la classe des dioxydes de titane, sulfures de zinc, oxydes de verre, oxydes de chrome, ultramarine, oxydes de nickel- ou chromantimoine-titane, oxydes de cobalt ou vanadates de bismuth.

14. Procédé pour la fabrication d'une préparation de pigments selon l'une des revendications 11 à 13, dans lequel on ajoute le ou les composés de formule (1), et éventuellement les autres additifs, dans la synthèse des pigments, au cours du broyage, de la dispersion ou du fini du pigment.
